(19) Europäisches Patentamt
European Patent Office
Office européen des brevets

(11) **EP 4 640 431 A1**

(12) **EUROPEAN PATENT APPLICATION**
published in accordance with Art. 153(4) EPC

(43) Date of publication:
**29.10.2025 Bulletin 2025/44**

(21) Application number: **23907160.8**

(22) Date of filing: **21.12.2023**

(51) International Patent Classification (IPC):
**B32B 27/30** *(2006.01)*    **B32B 27/00** *(2006.01)*
**B32B 27/08** *(2006.01)*    **B41M 5/52** *(2006.01)*
**C08L 25/04** *(2006.01)*    **C08L 33/10** *(2006.01)*
**C08L 33/20** *(2006.01)*

(52) Cooperative Patent Classification (CPC):
**B32B 27/00; B32B 27/08; B32B 27/30; B41M 5/52;
C08L 25/04; C08L 33/10; C08L 33/20**

(86) International application number:
**PCT/JP2023/046045**

(87) International publication number:
**WO 2024/135800 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2022   JP 2022205089
23.05.2023   JP 2023084294
09.08.2023   JP 2023129664
09.11.2023   JP 2023191424**

(71) Applicant: **Kuraray Co., Ltd.
Kurashiki-shi, Okayama 710-0801 (JP)**

(72) Inventors:
• **OZAWA, Yushi**
  **Tainai-shi, Niigata 959-2691 (JP)**
• **YAMANO, Masaharu**
  **Tainai-shi, Niigata 959-2691 (JP)**
• **TANIGUCHI, Norito**
  **Tainai-shi, Niigata 959-2691 (JP)**
• **NAKANO, Yoko**
  **Kurashiki-shi, Okayama 710-0801 (JP)**

(74) Representative: **Müller-Boré & Partner
Patentanwälte PartG mbB
Friedenheimer Brücke 21
80639 München (DE)**

(54) **LAMINATED SHEET, MANUFACTURING METHOD THEREFOR, PRINTED MATTER, AND MOLDED PRODUCT**

(57)    The present disclosure provides a laminated sheet that has favorable ink adhesion and laser cutting processability, and is highly sustainable. The laminated sheet (1) of the present disclosure has a base layer (11) and a surface layer (21) laminated on at least one side of the base layer (11), the base layer (11) includes a methacrylic-based resin (M) including 80 to 100% by mass of methyl methacrylate units, the surface layer (21) includes a styrene-based copolymer (S), the proportion of the total thickness of the surface layer (21) to the total thickness of the laminated sheet (1) is 1 to 20%, and the haze value of a 3.0 mm-thick single-layer molded sheet of the pulverized material of the laminated sheet (1) is 4% or less.

Fig. 1

EP 4 640 431 A1

## Description

## Technical Field

The present disclosure relates to a laminated sheet, a method for producing the same, a printed matter, and a shaped product.

## Background Art

Inkjet printing, which can record digital images on print media through computer processing, is becoming more and more popular with increasing types of printable media. For example, it is widely used in a variety of fields, including printing, advertising, signage and displays, events, amusement, architecture, and interior design. An example of a printing medium other than paper is resin sheet. Unlike paper, resin sheets are highly water-resistant and durable, and can also be made transparent.

The resin sheet for inkjet printing after being subjected to inkjet printing can be cut using a laser and NC router, as necessary, to form into the desired shape. The shaped product thus obtained can be favorably used for miscellaneous goods such as key holders and fixtures. A method for cutting a resin sheet using a laser is disclosed, for example, in claim 1 of Patent Literature 1.

## Citation List

## Patent Literatures

[Patent Literature 1]
Japanese Unexamined Patent Application Publication No. 2016-055348
[Patent Literature 2]
Japanese Unexamined Patent Application Publication No. 2018-94843
[Patent Literature 3]
Japanese Unexamined Patent Application Publication No. 2021-160119

## Summary of Invention

## Technical Problem

For applications such as miscellaneous goods such as key holders and fixtures, methacrylic-based resins are preferably used as the base resin for resin sheets for inkjet printing from the viewpoints of transparency and ink color development. As inks for inkjet printing, ultraviolet (UV) curable inks and the like are preferably used. However, methacrylic-based resins tend not to have significantly favorable adhesion to inkjet printing inks such as UV curable inks. Examples of components that have favorable adhesion to inkjet printing inks such as UV curable inks include styrene-based copolymers.

In general, in laser cutting, depending on the material of the workpiece, when the workpiece melts and evaporates due to laser light irradiation, evaporated gas may generate an unpleasant odor or smoke. In addition, after laser cutting is completed, when the molten part cools and solidifies again, evaporated gas may adhere to the cut surface, resulting in poor appearance of the cut surface. Methacrylic-based resins are less likely to have the above problems caused by evaporated gas (unpleasant odor or smoke caused by evaporated gas, and poor appearance of the cut surface due to adhesion of evaporated gas), and tend to have favorable laser cutting processability. In contrast, styrene-based copolymers having an aromatic ring structure in the molecule are more likely to have the above problems caused by evaporated gas (unpleasant odor or smoke caused by evaporated gas, and poor appearance of the cut surface due to adhesion of evaporated gas), and tend to have poor laser cutting processability.

Patent Literatures 2 and 3 disclose a laminated sheet that has a base layer including a methacrylic-based resin and a surface layer including a styrene-based copolymer such as methyl methacrylate-styrene copolymer (MS resin), and has favorable ink adhesion and laser cutting processability (claim 1 of Patent Literature 2, claim 1 of Patent Literature 3). This laminated sheet can be preferably produced by co-extrusion forming.

In general, in the production of (co)extrusion formed sheets and shaped products using the same, there are defective products that arise at the start-up of the extrusion forming production line, scraps generated by trimming both ends of the sheet, defective products that are determined not to meet product standards in quality inspections for defects

2

and foreign objects, and scraps generated by cutting the sheet. In recent years, efforts toward a sustainable society have been progressing, and it is preferable to effectively reuse the above-described defective products and scraps as rework materials rather than disposing of them.

In the laminated sheets disclosed in Patent Literatures 2 and 3, it is conceivable to use a previously produced laminated sheet including a methacrylic-based resin and a styrene-based copolymer such as MS resin as a base layer material as a rework material. However, styrene-based copolymers such as MS resin generally do not have favorable compatibility with methacrylic-based resins, and there is a refractive index difference between these resins, and thus a laminated sheet using the above-described rework material as a base layer material may have reduced transparency and become cloudy. In fact, Patent Literature 3 describes that "in order to suppress the occurrence of cloudiness and maintain transparency, the styrene content in the base layer is preferably 1% by mass or less, and more preferably 0.85% by mass or less" (paragraph 0171). In Patent Literature 3, the preferred styrene content in the base layer is significantly low. In addition, this Literature does not disclose any examples in which a previously produced laminated sheet including a methacrylic-based resin and a styrene-based copolymer such as MS resin is used as a rework material. It would be preferable to be able to use more rework material as the base layer material.

The present disclosure has been made in consideration of the above problems, and an objective thereof is to provide a laminated sheet that has favorable ink adhesion and laser cutting processability and is highly sustainable.

**Solution to Problem**

The present disclosure provides the following laminated sheets [1] to [15], the method for producing the same, printed matter, and shaped product.

[1] A laminated sheet including a base layer and a surface layer laminated on at least one side of the base layer, in which

the base layer includes a methacrylic-based resin (M) including 80 to 100% by mass of methyl methacrylate units, the surface layer includes a styrene-based copolymer (S),
the proportion of the total thickness of the surface layer to the total thickness of the laminated sheet is 1 to 20%, and
the haze value of a 3.0 mm-thick single-layer molded sheet of a pulverized material of the laminated sheet is 4% or less.

[2] The laminated sheet according to [1], in which the styrene-based copolymer (S) is one or more styrene-based copolymers selected from the group consisting of an acrylonitrile-styrene copolymer (AS), a styrene-maleic anhydride copolymer (SMA), and a styrene-maleic anhydride-methyl methacrylate copolymer (SMM).
[3] A laminated sheet according to [1] or [2], in which the content of styrene-based monomer units in the laminated sheet is 0.1 to 25% by mass.
[4] A laminated sheet according to any one of [1] to [3], in which the styrene-based copolymer (S) includes a styrene-based copolymer (SX) that is a binary copolymer of a styrene-based monomer unit (S) and a further monomer unit (X), and
when proportions of a triad chain of styrene-based monomer unit (S)-styrene-based monomer unit (S)-styrene-based monomer unit (S) (SSS), a triad chain of further monomer unit (X)-styrene-based monomer unit (S)-styrene-based monomer unit (S) (XSS), and a triad chain of further monomer unit (X)-styrene-based monomer unit (S)-further monomer unit (X) (XSX) are determined from $^{13}$C-NMR spectra measured under conditions of measurement mode: an inverse gated decoupling method, the styrene-based copolymer (SX) has a proportion of the triad chain (SSS) of 0 to 40 mol% and a proportion of the triad chain (XSX) of 5 to 34 mol% with respect to 100 mol% in total of the triad chain (SSS), the triad chain (XSS), and the triad chain (XSX).
[5] A laminated sheet according to any one of [1] to [4], wherein the styrene-based copolymer (S) includes an acrylonitrile-styrene copolymer (AS-E) in which, when gradient high-performance liquid chromatography analysis is performed under the following conditions using two eluents, n-hexane and chloroform, a proportion of a copolymer having a composition with an elution time of 9 minutes or less is 0 to 5% by mass, a proportion of a copolymer having a composition with an elution time of 23 minutes or more is 0 to 5% by mass, and an elution time of a maximum peak of chromatogram is 9 to 23 minutes,

<Conditions for gradient high-performance liquid chromatography analysis>

As a column, a silica gel column having an inner diameter of 4.6 mm φ and a length of 25 cm and packed with spherical fully porous silica gel with a particle size of 5 μm is used. The column temperature is set to 40°C. A sample solution with a concentration of 0.5 mg/mL is prepared using chloroform as the solvent.

The gradient profile of the mobile phase, where T (minutes) is the time from the start of analysis, is as follows.

The mobile phase from T = 0 to T = 5 is a mixed solution of n-hexane/chloroform (50% by volume/50% by volume).

From T = 5 to T = 20, the chloroform concentration in the mobile phase is increased at a constant rate from 50% by volume to 100% by volume.

From T = 20 to T = 25, the mobile phase is 100% by volume chloroform.

The flow rate of the mobile phase is 0.8 mL/min.

An absorbance detector with a detection wavelength of 260 nm is used as the detector.

[6] A laminated sheet according to any one of [1] to [5], in which the base layer includes a methacrylic-based resin composition (MR) containing a methacrylic-based resin (M) and a styrene-based copolymer (S).

[7] The laminated sheet according to [6], in which the base layer has a completely compatible structure of the styrene-based copolymer (S) and the methacrylic-based resin (M), or a sea-island structure in which a plurality of particulate island phases containing the styrene-based copolymer (S) are dispersed in a sea phase containing the methacrylic-based resin (M), and a maximum diameter of the plurality of particulate island phases is more than 0 nm and 50 nm or less.

[8] The laminated sheet according to [6], in which a content of a styrene-based monomer unit in the base layer is 0.5 to 10.0% by mass.

[9] The laminated sheet according to [6], in which at least a part of all raw materials of the base layer is a recycled resin composition (R) composed of a pulverized material of the laminated sheet previously produced or a processed material of the pulverized material.

[10] The laminated sheet according to any one of [1] to [9], in which a total thickness of the laminated sheet is 1 to 10 mm.

[11] The laminated sheet according to any one of [1] to [10], for inkjet printing and/or laser cutting.

[12] The laminated sheet according to any one of [1] to [11], being a co-extrusion formed sheet.

[13] A printed matter obtained by subjecting the surface layer of the laminated sheet according to any one of [1] to [12] to inkjet printing.

[14] A shaped product obtained by subjecting the laminated sheet according to any one of [1] to [12] to inkjet printing and laser cutting.

[15] A method for producing the laminated sheet according to [6], including co-extrusion forming the laminated sheet using a recycled resin composition (R) composed of a pulverized material of the laminated sheet previously produced or a processed material of the pulverized material as at least a part of all raw materials of the base layer.

**Advantageous Effects of Invention**

The present disclosure can provide a laminated sheet that has favorable ink adhesion and laser cutting processability, and excellent sustainability.

**Brief Description of Drawings**

Fig. 1 is a schematic cross-sectional view of a laminated sheet according to one embodiment of the present invention;

Fig. 2 is an example of a $^{13}$C-NMR spectrum of a styrene copolymer (SX) measured under the measurement mode: conditions of the inverse gated decoupling method;

Fig. 3 is an example of a chromatogram obtained by gradient high-performance liquid chromatography (gradient HPLC) analysis of an acrylonitrile-styrene-based copolymer (AS); and

Fig. 4 is an example of an electron microscope image showing the phase structure (island-sea structure) of the base layer included in the laminated sheet obtained in Comparative Example.

**Description of Embodiments**

[Laminated sheet]

The laminated sheet of the present disclosure has a base layer and a surface layer laminated on at least one side of the base layer. The base layer includes a methacrylic-based resin (M) containing 80 to 100% by mass of methyl methacrylate (MMA) units, and the surface layer includes a styrene-based copolymer (S). The laminated sheet of the present disclosure is suitable for inkjet printing and/or laser cutting.

The laminated structure of the laminated sheet of the present disclosure may be a two-layer structure having a surface layer on one side of a base layer.

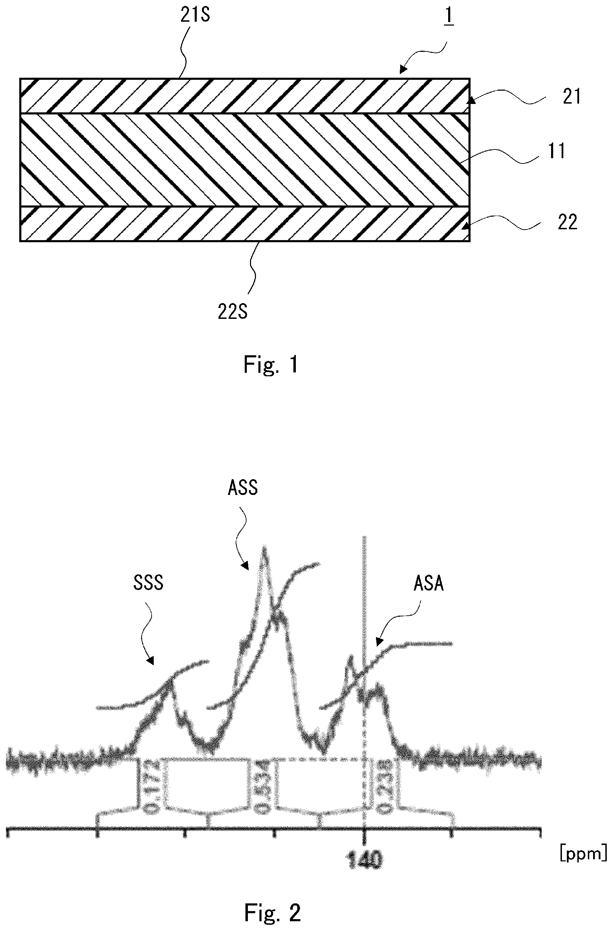

An example of the laminated structure of the laminated sheet of the present disclosure includes a three-layer structure having surface layers on both sides of the base layer in one embodiment shown in Fig. 1. In the figure, reference numeral 1 denotes a laminated sheet, reference numeral 11 denotes a base layer, reference numeral 21 denotes a first surface layer, and reference numeral 22 denotes a second surface layer. The laminated sheet 1 can include any other layer other than the base layer and the surface layer as necessary. However, a surface 21S of the first surface layer 21 opposite the base layer and/or a surface 22S of the second surface layer 22 opposite the base layer do not have any other layer thereon and are exposed surfaces. This exposed surface can be a printing surface on which printing is performed. In a three-layer laminated sheet, the thicknesses and compositions of the two surface layers may be the same or different.

The laminated sheet of the present disclosure is suitable as a resin sheet for inkjet printing. Inkjet printing methods include an electrostatic suction method, a method in which a piezoelectric element such as a piezo element is used to apply mechanical vibration or displacement to the ink, a method in which the ink is heated to foam and the resulting pressure is utilized, and a method in which an ultraviolet (UV) curable ink is used.

The surface layer of the laminated sheet of the present disclosure can be subjected to inkjet printing. The laminated sheet of the present disclosure after the inkjet printing can also be cut into a desired shape using a laser, NC router, and the like, as necessary. The shaped product thus obtained can be preferably used for miscellaneous goods such as key holders and fixtures. In such applications, a UV curable ink or the like is preferably used as the inkjet printing ink.

The styrene-based copolymer (S) having an aromatic ring structure in the molecule generally have favorable permeability of inkjet printing inks such as UV-curable inks, and favorable adhesion of inkjet printing inks. However, the styrene-based copolymer (S) having an aromatic ring structure has poor laser cutting processability, and when the resin melts and evaporates due to irradiation with laser light, the evaporated gas may produce an unpleasant odor or smoke. In addition, when the molten portion cools and solidifies again after laser cutting is completed, the evaporated gas may adhere to the cut surface, resulting in poor appearance of the cut surface.

The methacrylic-based resin (M) generally suppresses the above problems caused by evaporated gas (unpleasant odor or smoke caused by evaporated gas, and poor appearance of the cut surface due to adhesion of evaporated gas), and have favorable laser cutting processability. However, the permeability of inkjet printing inks such as UV-curable inks is poor, and the adhesion of inkjet printing inks tends to be poor.

The laminated sheet of the present disclosure has a surface layer including a styrene-based copolymer (S) having an aromatic ring structure in the molecule, and thus has favorable permeability of inkjet printing inks such as UV-curable inks, and favorable adhesion of inkjet printing inks.

The laminated sheet of the present disclosure has a laminated structure of a base layer including a methacrylic-based resin (M) and a surface layer including a styrene-based copolymer (S), and the proportion of styrene-based monomer units in the entire laminated sheet is reduced, thereby suppressing the above-described problems caused by evaporated gas during laser cutting (unpleasant odors or smoke caused by evaporated gas, and poor appearance of the cut surface due to adhesion of evaporated gas) and providing favorable laser cutting processability.

In the laminated sheet of the present disclosure, the proportion of the total thickness of the surface layer to the total thickness of the laminated sheet is 1 to 20%. The lower limit is preferably 2%, more preferably 3%. The upper limit is preferably 15%, more preferably 10%. When the proportion of the total thickness of the surface layer is equal to or more than the above lower limit, the thickness of the surface layer including the styrene-based copolymer (S) is sufficiently ensured, and favorable ink adhesion can be ensured. In addition, when the proportion of the total thickness of the surface layer is equal to or less than the above upper limit, the content of styrene-based monomer units in the laminated sheet can be reduced, and unpleasant odors or smoke due to evaporated gases during laser cutting and poor appearance of the cut surface due to adhesion of evaporated gases can be suppressed.

The content of styrene-based monomer units in the laminated sheet is the proportion of the total mass of styrene-based monomer units in the laminated sheet to the total mass of the laminated sheet, and is also called the "average concentration of styrene-based monomer units in the laminated sheet" or the "average concentration of styrene-based monomer units in the entire laminated sheet". This average styrene-based monomer unit concentration is not particularly limited, and is preferably 0.1 to 25% by mass. The lower limit is more preferably 0.5% by mass, still more preferably 1.0% by mass, even more preferably 2.0% by mass, particularly preferably 3.0% by mass, and most preferably 5.0% by mass. The upper limit is more preferably 22% by mass, still more preferably 20% by mass, even more preferably 17% by mass, particularly preferably 15% by mass, and most preferably 10% by mass. When the average concentration of styrene-based monomer units in the laminated sheet is equal to or more than the lower limit, favorable ink adhesion can be ensured, and when equal to or less than the upper limit, unpleasant odors or smoke due to evaporated gas during laser cutting and poor appearance of the cut surface due to adhesion of evaporated gas can be suppressed.

In the laminated sheet of the present disclosure, the total thickness of the laminated sheet is not particularly limited, and is preferably 1 to 10 mm, more preferably 1 to 5 mm, because of providing favorable inkjet printability and laser cutting processability. For example, when the total thickness of the laminated sheet is 3 mm, the thickness of the base layer is preferably 2.4 to 2.9 mm, the thickness of one surface layer is preferably 30 to 300 μm, and the total thickness of the surface layers is preferably 30 to 600 μm.

The laminated sheet of the present disclosure has a haze value of 4% or less, preferably 3% or less, more preferably 2% or less, and particularly preferably 1% or less, of a 3.0 mm-thick single-layer molded sheet of the pulverized material of the laminated sheet of the present disclosure. The above haze value of the single-layer molded sheet can be achieved by using those having favorable compatibility with the methacrylic-based resin (M) as a styrene-based copolymer (S) included in the surface layer. If the haze value of the single-layer molded sheet is 4% or less, the laminated sheet of the present disclosure having excellent transparency can be produced using a recycled resin composition (R) composed of a pulverized material or a processed material of the pulverized material of the laminated sheet of the present disclosure previously produced as at least a part of all raw materials of the base layer. The laminated sheet of the present disclosure having the above features can be used as a rework material or can include a rework material, and has excellent sustainability.

Unless otherwise specified, "transparent" is defined in the present specification as a haze value of 4% or less.

A 3.0 mm-thick single-layer molded sheet of the pulverized material of the laminated sheet of the present disclosure can be obtained by a known method, for example, as follows.

The laminated sheet of the present disclosure is pulverized using a known pulverizer for pulverizing resins. The pulverized material obtained is melt-kneaded using an extruder and a kneading-extrusion tester ("Labo Plastomill (registered trademark)", manufactured by Toyo Seiki Seisaku-sho, Ltd.) to provide a homogeneous resin composition. The molten mixture obtained is molded by a known method such as hot press molding to provide a 3.0 mm-thick single-layer molded sheet.

The melt-kneading temperature and molding temperature in molding the single-layer molded sheet are preferably within the range of the suitable melt-kneading temperature of the base layer material when forming (preferably co-extrusion forming) the laminated sheet of the present disclosure, and can be, for example, the maximum temperature in the extruder used for melt-kneading the base layer material when forming (preferably co-extrusion forming) the laminated sheet of the present disclosure. The melt-kneading temperature and molding temperature in molding the single-layer molded sheet are preferably 190 to 280°C, more preferably 210 to 270°C, particularly preferably 230 to 260°C, and for example, 250°C is preferable.

For specific examples of a method for molding a single-layer molded sheet and a method for measuring the haze value thereof, refer to the section of [Examples] described later.

The laminated sheet of the present disclosure is preferably a co-extrusion formed sheet.

The haze value of the laminated sheet of the present disclosure is not particularly limited, and is preferably 4% or less, more preferably 3% or less, particularly preferably 2% or less, and most preferably 1% or less.

Using a specific styrene-based copolymer that has favorable compatibility with the methacrylic-based resin (M) as the styrene-based copolymer (S) included in the surface layer can produce a laminated sheet of the present disclosure that has a low haze value and excellent transparency, even if a recycled resin composition (R) composed of a pulverized material or a processed material of the pulverized material of the previously produced laminated sheet of the present disclosure is used as at least a part of all raw materials of the base layer.

(Surface Layer)

The surface layer includes one or more of styrene-based copolymers (S). The styrene-based monomer units included in the styrene-based copolymers (S) include styrene, α-methylstyrene, o-, m-, or p-methylstyrene, and combinations of these, preferably styrene or the like.

As described above, in the present disclosure, the styrene-based copolymer (S) used is one that has favorable compatibility with the methacrylic-based resin (M). From the viewpoint of compatibility with the methacrylic-based resin (M), examples of the styrene-based copolymer (S) include one or more styrene-based copolymers selected from the group consisting of acrylonitrile-styrene copolymer (AS resin), styrene-maleic anhydride copolymer (SMA resin), styrene-maleic anhydride-methyl methacrylate copolymer (SMM resin), and methyl methacrylate-styrene-based copolymer (MS resin).

Among these, one or more styrene-based copolymers selected from the group consisting of acrylonitrile-styrene copolymer (AS resin), styrene-maleic anhydride copolymer (SMA resin), and styrene-maleic anhydride-methyl methacrylate copolymer (SMM resin) are preferable because of the excellent compatibility with the methacrylic-based resin (M). More preferable are acrylonitrile-styrene-based copolymers (AS resins), styrene-maleic anhydride copolymers (SMA resins), or combinations thereof.

From the viewpoint of compatibility with the methacrylic-based resin (M), the content of styrene units in the acrylonitrile-styrene-based copolymer (AS resin) is preferably 75 to 95% by mass. The lower limit is more preferably 76% by mass, and particularly preferably 77% by mass. The upper limit is more preferably 90% by mass, still more preferably 88% by mass, particularly preferably 85% by mass, and most preferably 83% by mass.

Commercially available AS resins include "Lithac-A 100PCF" and "120PCF" manufactured by NIPPON A&L INC.; "Sunrex SAN-C", "SAN-R", and "SAN-H" manufactured by Techno-UMG Co., Ltd.; "Denka AS AS-C-800" and "AS-C-820" manufactured by Denka Company Limited; "Toyolac" manufactured by TORAY INDUSTRIES, INC.; and "Cevian N" manufactured by Daicel Miraizu Ltd. Among these, "Lithac-A 100PCF" manufactured by NIPPON A&L INC.; "Sunrex SAN-C" manufactured by Techno-UMG Co., Ltd.; and "Denka AS AS-C-820" manufactured by Denka Company Limited are preferable.

From the viewpoint of compatibility with the methacrylic-based resin (M), the content of styrene units in the styrene-maleic anhydride copolymer (SMA resin) is preferably 60 to 95% by mass. The lower limit is more preferably 70% by mass, and particularly preferably 75% by mass. The upper limit is more preferably 90% by mass, and particularly preferably 80% by mass.

Commercially available SMA resins include "XIRAN" and "XIBOND" manufactured by Polyscope Polymers BV; "SMA-700" manufactured by Jiaxing Huawen Chemical Co., Ltd.; and "SAM-020" manufactured by Fine-blend Polymer Co., Ltd.

From the viewpoint of compatibility with the methacrylic-based resin (M), the content of styrene units in the styrene-maleic anhydride-methyl methacrylate copolymer (SMM resin) is preferably 60 to 95% by mass. The lower limit is more preferably 70% by mass, and particularly preferably 75% by mass. The upper limit is more preferably 90% by mass, and particularly preferably 80% by mass.

Commercially available SMM resins include "Resisfy R-200" manufactured by Denka Company Limited or the like.

In the surface layer, the total amount of one or more styrene-based copolymers selected from the group consisting of acrylonitrile-styrene copolymers (AS resins), styrene-maleic anhydride copolymers (SMA resins), and styrene-maleic anhydride-methyl methacrylate copolymers (SMM resins) is preferably 51 to 100% by mass. The lower limit is more preferably 65% by mass, particularly preferably 70% by mass, and most preferably 80% by mass.

Methyl methacrylate-styrene-based copolymers (MS resins) are compatible with methacrylic-based resins (M) and can be used in small amounts. When using methyl methacrylate-styrene-based copolymers (MS resins), it is preferable to use them in combination with styrene-based copolymers that have excellent compatibility with methacrylic-based resins (M), such as acrylonitrile-styrene copolymers (AS resins), styrene-maleic anhydride copolymers (SMA resins), and styrene-maleic anhydride-methyl methacrylate copolymers (SMM resins).

The amount of methyl methacrylate-styrene copolymer (MS resin) in the surface layer is preferably 0 to 1.5% by mass. The upper limit is more preferably 1.2% by mass, particularly preferably 1.0% by mass, and most preferably 0.85% by mass. From the viewpoint of compatibility with the methacrylic-based resin (M), the content of styrene units in the methyl methacrylate-styrene copolymer (MS resin) is preferably 35 to 50% by mass. The upper limit is more preferably 45% by mass.

Commercially available MS resins include "TOYO MS MS600" manufactured by TOYO STYRENE Co., Ltd.; "DENKA TX Polymer TX-100S" manufactured by Denka Company Limited; and "CEVIAN NAS" manufactured by Daicel Miraizu Ltd.

The styrene-based copolymer (S) can include one or more styrene-based copolymers (SX) that are binary copolymers of a styrene-based monomer unit (S) and a further monomer unit (X).

The styrene-based copolymer (SX) includes a triad chain of styrene-based monomer unit (S)-styrene-based monomer unit (S)-styrene-based monomer unit (S) (SSS), a triad chain of further monomer unit (X)-styrene-based monomer unit (S)-styrene-based monomer unit (S) (XSS), and a triad chain of further monomer unit (X)-styrene-based monomer unit (S)-further monomer unit (X) (XSX). The proportion of each triad chain can be determined from measurement mode: a $^{13}$C-NMR spectrum measured under the conditions of the inverse gated decoupling method.

From the viewpoint of compatibility with the methacrylic-based resin (M), the styrene-based copolymer (SX) preferably has a proportion of triad chain (SSS) of 0 to 40 mol% and a proportion of triad chain (XSX) of 5 to 34 mol% with respect to 100 mol% in total of the triad chain (SSS), the triad chain (XSS), and the triad chain (XSX).

The lower limit of the proportion of triad chain (SSS) is preferably 10 mol%, more preferably 15 mol%. The upper limit of the proportion of triad chain (SSS) is preferably 37 mol%, more preferably 35 mol%.

The lower limit of the proportion of triad chain (XSX) is preferably 10 mol%, more preferably 15 mol%, and particularly preferably 20 mol%. The upper limit of the proportion of triad chain (XSX) is preferably 32 mol%, more preferably 30 mol%.

The proportion of triad chain (XSS) is not particularly limited, and is preferably 40 to 80 mol%. The lower limit of the proportion of triad chain (XSS) is more preferably 50 mol%, and particularly preferably 55 mol%. The upper limit of the proportion of triad chain (XSS) is more preferably 75 mol%, and particularly preferably 70 mol%.

The further monomer units (X) included in the styrene-based copolymer (SX) are not particularly limited. Examples of the styrene-based copolymer (SX) include one or more styrene-based copolymers selected from the group consisting of acrylonitrile-styrene copolymer (AS resin), styrene-maleic anhydride copolymer (SMA resin), and methyl methacrylate-styrene copolymer (MS resin). Among these, one or more styrene-based copolymers selected from the group consisting of acrylonitrile-styrene copolymer (AS resin) and styrene-maleic anhydride copolymer (SMA resin) are preferable because of the excellent compatibility with the methacrylic-based resin (M).

When the styrene-based copolymer (SX) is an acrylonitrile-styrene copolymer (AS resin), the styrene-based monomer unit (S) is a styrene unit, and the further monomer unit (X) is an acrylonitrile unit. As the styrene-based copolymer (SX), an AS resin in which the proportion of triad chain (SSS) is 0 to 40 mol% and the proportion of triad chain (XSX) is 5 to 34 mol% can be preferably used.

When the styrene-based copolymer (SX) is a styrene-maleic anhydride copolymer (SMA resin), the styrene-based monomer unit (S) is a styrene unit, and the further monomer unit (X) is a maleic anhydride unit. In the present disclosure, as the styrene-based copolymer (SX), an SMA resin having a proportion of triad chain (SSS) of 0 to 40 mol% and a proportion of triad chain (XSX) of 5 to 34 mol% can be preferably used.

When the styrene-based copolymer (SX) is a methyl methacrylate-styrene-based copolymer (MS resin), the styrene-based monomer unit (S) is a styrene unit and the further monomer unit (X) is a methyl methacrylate unit. In the present disclosure, as the styrene-based copolymer (SX), an MS resin having a proportion of triad chain (SSS) of 0 to 40 mol% and a proportion of triad chain (XSX) of 5 to 34 mol% can be preferably used.

The styrene-based copolymer (S) preferably includes one or more acrylonitrile-styrene-based copolymers (AS) because of favorable compatibility with the methacrylic-based resin (M), and further preferably includes one or more of the following acrylonitrile-styrene-based copolymers (AS-E) having specific properties.

In the acrylonitrile-styrene-based copolymer (AS-E), when gradient high-performance liquid chromatography (gradient HPLC) analysis is performed under the following conditions using two eluents, n-hexane and chloroform, the proportion of a copolymer having a composition with an elution time of 9 minutes or less is 0 to 5% by mass, the proportion of a copolymer having a composition with an elution time of 23 minutes or more is 0 to 5% by mass, and the elution time of the maximum peak of the chromatogram is 9 to 23 minutes.

<Conditions for gradient high-performance liquid chromatography (gradient HPLC) analysis>

As a column, a silica gel column having an inner diameter of 4.6 mm $\varphi$ and a length of 25 cm and packed with spherical fully porous silica gel with a particle size of 5 $\mu$m is used. The column temperature is set to 40°C. A sample solution with a concentration of 0.5 mg/mL is prepared using chloroform as the solvent.

The gradient profile of the mobile phase, when the time from the start of the analysis is T (minutes), is as follows.

The mobile phase between T = 0 and T = 5 is a n-hexane/chloroform mixed solution (50% by volume/50% by volume).

Between T = 5 and T = 20, the chloroform concentration in the mobile phase is increased at a constant rate from 50% by volume to 100% by volume.

Between T = 20 and T = 25, the mobile phase is 100% by volume chloroform.

The flow rate of the mobile phase is 0.8 mL/min.

As a detector, an absorbance detector with a detection wavelength of 260 nm is used.

According to the research of the present inventors, it has been found that an acrylonitrile-styrene-based copolymer (AS-E) in which the proportion of copolymers eluting significantly early, i.e., elution time of 9 minutes or less, is equal to or less than the upper limit value in the gradient HPLC analysis, the proportion of copolymers eluting significantly late, i.e., elution time of 23 minutes or more, is equal to or less than the upper limit value in the gradient HPLC analysis, and the elution time of the peak top of the maximum peak in the chromatogram is 9 to 23 minutes, is excellent in compatibility with the methacrylic-based resin (M) and is preferable.

From the viewpoint of compatibility with the methacrylic-based resin (M), the upper limit of the proportion of copolymers having a composition with an elution time of 9 minutes or less in the above gradient HPLC analysis is preferably 4% by mass, more preferably 3% by mass, particularly preferably 2% by mass, and most preferably 1% by mass.

From the viewpoint of compatibility with the methacrylic-based resin (M), the upper limit of the proportion of copolymers having a composition with an elution time of 23 minutes or more in the above gradient HPLC analysis is preferably 4% by mass, more preferably 3% by mass.

From the viewpoint of compatibility with the methacrylic-based resin (M), the lower limit of the elution time of the peak top of the maximum peak in the chromatogram obtained in the gradient HPLC analysis is more preferably 10 minutes, particularly preferably 12 minutes, and most preferably 15 minutes.

From the viewpoint of compatibility with the methacrylic-based resin (M), the upper limit of the elution time of the peak top of the maximum peak in the chromatogram obtained in the gradient HPLC analysis is more preferably 22 minutes, particularly preferably 21 minutes, and most preferably 20 minutes.

From the viewpoint of compatibility with the methacrylic-based resin (M) and transparency of the base layer, it is preferable that the maximum peak of the chromatogram obtained in the gradient HPLC analysis has a peak width ($W_{0.05h}$) at 5% height measured in accordance with JIS K0124 of 1 to 5 minutes, and a symmetry factor (S) measured in accordance with JIS K0124 of 1.2 to 3.4.

The lower limit of the peak width ($W_{0.05h}$) at 5% height is more preferably 2 minutes, particularly preferably 3 minutes, and most preferably 4 minutes.

The lower limit of the symmetry factor (S) is more preferably 1.3, particularly preferably 1.4, and most preferably 1.5. The upper limit of the symmetry factor (S) is more preferably 3.2, still more preferably 3.0, even more preferably 2.8, particularly preferably 2.5, and most preferably 2.0.

For specific examples of gradient HPLC analysis and measurements of various parameters, refer to the section [Examples] described below.

Acrylonitrile-butadiene-styrene-based copolymer (ABS resin), methyl methacrylate-butadiene-styrene-based copolymer (MBS resin), and high impact polystyrene graft-copolymerized with butadiene (HIPS resin) are not preferably used as the styrene-based copolymer (S) because of poorly compatible with the methacrylic-based resin (M).

Within the range that satisfies the feature that the haze value of a 3.0 mm-thick single-layer molded sheet of the pulverized laminated sheet of the present disclosure is 4% or less, the surface layer can include one or more methacrylic-based resins (M) and/or one or more other acrylic-based resins (A) other than the methacrylic-based resin (M), as necessary. Examples of the optional other acrylic-based resins (A) include the same as those of the base layer. The methacrylic-based resin (M) in the surface layer may be the same or different from the methacrylic-based resin (M) in the base layer. The same applies to the optional other acrylic-based resin (A). The content (total amount in the case of a plurality of types, unless otherwise specified) of the methacrylic-based resin (M) and/or other acrylic-based resin (A) in the surface layer is preferably 0 to 10% by mass. The upper limit is more preferably 5% by mass, and particularly preferably 2% by mass.

Within the range that satisfies the feature that the haze value of a 3.0 mm-thick single-layer molded sheet of the pulverized material of the laminated sheet of the present disclosure is 4% or less, the surface layer can include, as necessary, one or more other polymers other than the styrene-based polymer (S), the methacrylic-based resin (M), and the other acrylic-based resin (A). The other polymers are not particularly limited, and examples thereof include polyolefins such as polyethylene and polypropylene, other thermoplastic resins such as polyamide, polyphenylene sulfide, polyether ether ketone, polyester, polysulfone, polyphenylene oxide, polyimide, polyetherimide, and polyacetal; and thermosetting resins such as phenolic resin, melamine resin, silicone resin, and epoxy resin. The content of the other polymer in the surface layer is preferably 0 to 10% by mass. The upper limit is more preferably 5% by mass, and particularly preferably 2% by mass. The surface layer may not include any other polymers than the styrene-based polymer (S), the methacrylic-based resin (M), and the other acrylic-based resin (A).

The surface layer can include various additives as necessary within the range that satisfies the feature that the haze value of a 3.0 mm-thick single-layer molded sheet of the pulverized material of the laminated sheet of the present disclosure is 4% or less. Additives include colorants, antioxidants, heat deterioration inhibitors, UV absorbers, light stabilizers, lubricants, release agents, polymer processing aids, antistatic agents, flame retardants, light diffusing agents, matting agents, rubber components (impact resistance modifiers) such as core-shell particles and block copolymers, and fluorescent materials. The content of the additives can be appropriately set within a range that does not impair the effects of the present invention. For example, the content of the antioxidant is preferably 0.01 to 1 part by mass, the content of the UV absorber is preferably 0.01 to 3 parts by mass, the content of the light stabilizer is preferably 0.01 to 3 parts by mass, and the content of the lubricant is preferably 0.01 to 3 parts by mass, with respect to 100 parts by mass of the constituent resin (100 parts by mass in total in the case of a plurality of types) of the surface layer.

When other polymers and/or additives are added to the surface layer, the timing of addition may be during or after polymerization of the styrene-based copolymer (S).

The glass transition temperature (Tg) of the constituent resin (a mixed resin composition in the case of a plurality of types) of the surface layer is not particularly limited, but is preferably 80 to 160°C, more preferably 100 to 110°C.

(Base layer)

The base layer includes one or more methacrylic-based resins (M). The methacrylic-based resin (M) is a homopolymer or copolymer including methyl methacrylate (MMA) units. From the viewpoint of transparency, the content of MMA units in the methacrylic resin (M) is 80 to 100% by mass. The lower limit is preferably 90% by mass, more preferably 95% by mass.

The methacrylic-based resin (M) can include one or more (meth)acrylic acid ester units other than the MMA unit. Examples of the (meth)acrylic acid ester other than MMA include methyl acrylate (MA), ethyl (meth)acrylate, n-propyl (meth)acrylate, isopropyl (meth)acrylate, n-butyl (meth)acrylate, isobutyl (meth)acrylate, t-butyl (meth)acrylate, hexyl (meth)acrylate, 2-ethylhexyl (meth)acrylate, nonyl (meth)acrylate, decyl (meth)acrylate, dodecyl (meth)acrylate, stearyl (meth)acrylate, 2-hydroxyethyl (meth)acrylate, 2-hydroxypropyl (meth)acrylate, (meth) 4-hydroxybutyl acrylate, cyclohexyl (meth)acrylate, 2-methoxyethyl (meth)acrylate, 3-methoxybutyl (meth)acrylate, trifluoromethyl (meth)acrylate, trifluoroethyl (meth)acrylate, pentafluoroethyl (meth)acrylate, glycidyl (meth)acrylate, allyl (meth)acrylate, phenyl (meth)acrylate, toluyl (meth)acrylate, benzyl (meth)acrylate, isobornyl (meth)acrylate, and 3-dimethylaminoethyl (meth)acrylate. Among these, MA is preferable from the viewpoint of transparency. For example, a copolymer of MMA and MA has excellent transparency and is preferable.

In the present specification, (meth)acrylic is a general term for acrylic and methacrylic, and the same applies to (meth)acrylic acid and (meth)acrylonitrile and the like.

The base layer can include one or more other acrylic-based resins (A) other than the methacrylic-based resin (M) as necessary. The "other acrylic-based resins (A)" referred to in the present specification are methacrylic-based resins having an MMA unit content of less than 80% by mass and (meth)acrylic resins that do not include MMA units and include one or more (meth)acrylic acid ester units other than MMA units.

The methacrylic-based resin (M) and the other acrylic-based resin (A) may include structural units derived from one or more further monomers other than (meth)acrylic acid esters. The further monomers include (meth)acrylic acid; (meth)acrylic acid metal salts; (meth)acrylonitrile; (meth)acrylamide; vinyl-based monomers such as vinyl chloride and vinyl acetate; acid anhydrides such as maleic anhydride; maleimides such as phenylmaleimide and cyclohexylmaleimide; styrene-based monomers such as styrene, $\alpha$-methylstyrene, and vinyltoluene.

The content (total amount in the case of a plurality of types) of structural units derived from further monomers other than (meth)acrylic acid esters in the methacrylic-based resin (M) and other acrylic-based resin (A) is preferably 0 to 10% by mass. The upper limit is more preferably 5% by mass, and particularly preferably 2% by mass.

The content (total amount in the case of a plurality of types) of styrene-based monomer units in the methacrylic resin (M) and other acrylic resin (A) is preferably 0 to 1.5% by mass. The upper limit is more preferably 1.2% by mass, particularly preferably 1.0% by mass, and most preferably 0.85% by mass. The methacrylic-based resin (M) and other acrylic-based resin (A) may not include styrene-based monomer units.

The methacrylic-based resin (M) and other acrylic-based resin (A) are obtained by polymerizing one or more (meth)acrylic acid esters and, as necessary, further monomers. When a plurality of types of monomers are used, the plurality of types of monomers are typically mixed to prepare a monomer mixture, and then polymerization is performed. The polymerization method is not particularly limited, and from the viewpoint of productivity, the radical polymerization method such as bulk polymerization method, suspension polymerization method, solution polymerization method, and emulsion polymerization method are preferable.

Within the range that satisfies the feature that the haze value of a 3.0 mm-thick single-layer molded sheet of the pulverized material of the laminated sheet of the present disclosure is 4% or less, the base layer can include one or more styrene-based copolymers (S) as necessary. That is, the base layer can be composed of a methacrylic-based resin composition (MR) including a methacrylic-based resin (M) and a styrene-based copolymer (S). The styrene-based copolymer (S) in the base layer can be the same as or different from the styrene-based copolymer (S) in the surface layer.

When the base layer includes a styrene-based monomer unit, there is a tendency that the amount of warping change of the laminated sheet after being left in a high-humidity environment can be effectively reduced.

In general, in the production of (co)extrusion formed sheets and shaped products using the same, there are defective products that arise at the start-up of the extrusion forming production line, scraps generated by trimming both ends of the sheet, defective products that are determined not to meet product standards in quality inspections for defects and foreign matter, and scraps generated by cutting the sheet. In recent years, efforts toward a sustainable society have been made, and it is preferable to reuse the above-described defective products and scraps as rework materials and make effective use of them instead of disposing of them.

In the present specification, the "virgin material" refers to a molding material that has never been subjected to molding processing, and the "rework material" refers to a molding material that has been molded and processed as a shaped product at least once in the past.

At least a part of the total raw material of the base layer can be a recycled resin composition (R) (also called a rework material) of a pulverized material of the laminated sheet of the present disclosure previously produced or a processed material of the pulverized material. The above-described processed material can be in the form of a strand, a pellet, and the like.

As described above, the haze value of a 3.0 mm-thick single-layer molded sheet of the pulverized material of the laminated sheet of the present disclosure is 4% or less, and thus a laminated sheet of the present disclosure having excellent transparency can be produced by using a recycled resin composition (R) composed of the pulverized material of the laminated sheet of the present disclosure that was previously produced or a processed material of the pulverized material as at least a part of the total raw material of the base layer.

The content of styrene-based monomer units in the base layer is not particularly limited, and is preferably 0 to 10.0% by mass. The lower limit is more preferably 0.5% by mass, still more preferably 0.7% by mass, particularly preferably 0.8% by mass, and most preferably 1.0% by mass.

Patent Literature 3, cited in the [Background Art] section, describes that "in order to suppress the occurrence of cloudiness and maintain transparency, the styrene content in the base layer is preferably 1% by mass or less, more preferably 0.85% by mass or less" (paragraph 0171).

With the technology disclosed herein, the content of styrene-based monomer units in the base layer can be made higher than the range described in Patent Literature 3, and can be 1.2% by mass or more, 1.5% by mass or more, 2.0% by mass or more, 2.5% by mass or more, 3.0% by mass or more, 3.5% by mass or more, or 4.0% by mass or more. The upper limit is more preferably 9.0% by mass, particularly preferably 8.5% by mass, and most preferably 8.0% by mass.

The styrene-based copolymer (S) included in the base layer can have excellent compatibility with the methacrylic-based resin (M). Therefore, the base layer can have the following phase structure and excellent transparency.

The base layer can have a completely compatible structure composed of a homogeneous phase in which the styrene-based copolymer (S) and the methacrylic-based resin (M) are completely compatible in an electron microscope image (preferably a transmission electron microscope image (TEM image)).

Alternatively, the base layer can have a microphase separation structure (sea-island structure) in which a plurality of particulate island phases including the styrene-based copolymer (S) are dispersed in a sea phase including the methacrylic-based resin (M) in an electron microscope image (preferably a transmission electron microscope image (TEM image)), and the maximum diameter of the plurality of particulate island phases is more than 0 nm and 50 nm or less. The island phase is also called a discontinuous phase or domain. The sea phase is also called a continuous phase or matrix. The island phase may include the styrene-based copolymer (S) and the methacrylic-based resin (M).

The maximum diameter of a plurality of particulate island phases in the phase structure and the microphase separation structure (sea-island structure) of the base layer can be determined by electron microscope observation. Specific methods for determination are described in the section [Examples] below.

Unless otherwise specified in the present specification, the diameter of any one non-circular island phase is the maximum diameter (also referred to as the longest diameter) of that island phase. The maximum diameter of a plurality of particulate island phases is the diameter of the largest island phase among 100 pieces of randomly selected particulate island phases.

From the viewpoint of transparency, it is preferable that the maximum diameter of a plurality of particulate island phases is small, and the upper limit is preferably 40 nm, more preferably 30 nm, still more preferably 20 nm, even more preferably 10 nm, and particularly preferably 5 nm.

It is most preferable that the base layer has a completely compatible structure composed of a homogeneous phase in which the styrene-based copolymer (S) and the methacrylic-based resin (M) are completely compatible with each other in an electron microscope image (preferably a transmission electron microscope image (TEM image)).

Within the range that satisfies the feature that the haze value of a 3.0 mm-thick single-layer molded sheet of the pulverized material of the laminated sheet of the present disclosure is 4% or less, the base layer can, as necessary, include one or more other polymers other than the methacrylic-based resin (M), other acrylic-based resin (A), and styrene-based polymer (S). The base layer can include various additives as necessary. Examples of the types of other polymers and additives and the preferable amounts to be added are the same as for the surface layer.

The glass transition temperature (Tg) of the constituent resin (a mixed resin composition in the case of a plurality of types) of the base layer is not particularly limited, and is preferably 100 to 140°C, more preferably 105 to 135°C, and particularly preferably 105 to 125°C.

[Method for producing laminated sheet]

The laminated sheet of the present disclosure can be produced by a known sheet forming method, and an extrusion forming method and the like are preferable from the viewpoints of production efficiency and interlayer adhesion. In the case of the extrusion forming method, it is preferable that a co-extrusion forming in which a base layer material including a methacrylic-based resin (M) or a methacrylic-based resin composition (MR) and a surface layer material including a styrene-based copolymer (S) that have been melt-kneaded using different extruders are co-extruded from a common extrusion die (such as a T-die).

Co-extrusion die method include multi-manifold die method and feed block method. In the feed block method, a molten base layer material including the methacrylic-based resin (M) or the methacrylic-based resin composition (MR) and a molten surface layer material including the styrene-based copolymer (S) are laminated in a feed block, and then introduced into a T-die or the like to be formed into a sheet and co-extruded. In the multi-manifold die method, a molten base layer material including the methacrylic-based resin (M) or the methacrylic-based resin composition (MR) and a molten surface layer material including the styrene-based copolymer (S) are introduced into a T-die or the like and formed into a sheet, and then laminated and co-extruded. In the laminated sheet of the present disclosure, the surface layer is designed to be thin. In this case, the multi-manifold die method is preferable.

In either method, the thermoplastic resin laminate extruded from a T-die or the like is cooled by passing through the gap between at least a pair of cooling pressure rolls, and then taken up by a take-up roll. The above co-extrusion, cooling, and take-up steps are performed continuously. In the present specification, the heated and molten state is mainly referred to as a "thermoplastic resin laminate", and the solidified state is referred to as a "laminated sheet", but there is no clear boundary between the two.

In the co-extrusion forming of the laminated sheet of the present disclosure, the T-die temperature (Td) is preferably 190 to 280°C. If Td is less than 190°C, the melt viscosity of the methacrylic-based resin (M) or methacrylic-based resin composition (MR) and the styrene-based copolymer (S) may become too high, which may fail to extrusion form these resins satisfactorily. If Td is more than 280°C, the styrene-based copolymer (S) may decompose due to the high temperature. Td is more preferably 210 to 270°C, and particularly preferably 230 to 260°C.

The lip thickness of the T-die is designed according to the desired total thickness of the laminated sheet (preferably 1 to 10 mm).

The take-up speed (V) of the laminated sheet by a pair of take-up rolls is not particularly limited, and is preferably 0.5 to 2.0 m/min.

In a method for producing the laminated sheet of the present disclosure, the laminated sheet of the present disclosure can be co-extrusion formed using a recycled resin composition (R) composed of a pulverized material of the laminated sheet of the present disclosure previously produced or a processed material of the pulverized material as at least a part of the total raw material of the base layer.

The proportion of the recycled resin composition (R) in the total raw material of the base layer is not particularly limited and can be, for example, 1 to 100% by mass. In the technology of the present disclosure, the proportion of the recycled resin composition (R) in the total raw material of the base layer can be increased, and can be 10 to 100% by mass, 20 to 100% by mass, 30 to 100% by mass, 40 to 100% by mass, or 50 to 100% by mass.

Generally, when the same material is repeatedly reworked, the quality of the reworked material deteriorates, and the haze value of the laminated sheet using this material may become high. Taking into consideration the number of reworks or the quality of the rework material, it is preferable to adjust the proportion of the rework material used within a range that satisfies the feature that the haze value of a 3.0 mm-thick single-layer molded sheet of the pulverized material of the laminated sheet of the present disclosure is 4% or less.

Even if at least a part of the total raw material of the base layer is a recycled resin composition (R) composed of the pulverized material of the previously produced laminated sheet of the present disclosure or the processed material of the pulverized material, the laminated sheet of the present disclosure has excellent transparency and can have a haze value of 4% or less, 3% or less, 2% or less, or 1% or less at a thickness of 3.0 mm.

[Printed matter, shaped product]

The laminated sheet of the present disclosure can be preferably used as a resin sheet for inkjet printing. A printed matter can be provided by subjecting the surface layer including the styrene-based copolymer (S) included in the laminated sheet of the present disclosure to inkjet printing. The laminated sheet of the present disclosure after the inkjet printing can also be cut into a desired shape using a laser, an NC router, and the like, as necessary.

The laminated sheet of the present disclosure has favorable laser cutting processability, and thus fine cutting is possible. For example, a shaped product having a curved cut portion with a radius of 0.5 to 2 mm can be produced with favorable shape accuracy. The laminated sheet of the present disclosure has favorable laser cutting processability, and thus cutting can be possible at high speed and with favorable productivity using a high-power laser processing machine. For example, a shaped product can be produced by cutting the laminated sheet of the present disclosure with a laser processing machine with an output of 100 W or more at a speed of 350 cm/min or more.

As described above, according to the present disclosure, it is possible to provide a laminated sheet that has favorable ink adhesion and laser cutting processability, and is highly sustainable.

[Uses]

The laminated sheet, printed matter, and shaped product disclosed herein can be used in a variety of fields, including printing, advertising, sign displays, events, amusement, architecture, and interior design.

The laminated sheet, printed matter, and shaped product disclosed herein can be preferably used for miscellaneous items such as key holders and fixtures.

**Examples**

Examples and Comparative Examples of the present invention are described below.

[Evaluation item and evaluation method]

(Content of styrene-based monomer units in styrene-based copolymer (S))

The content of styrene-based monomer units (specifically, styrene units) in the styrene-based copolymer (S) was

determined by $^1$H-NMR. The $^1$H-NMR spectrum of the styrene-based copolymer (S) was measured using a nuclear magnetic resonance apparatus (ULTRA SHIELD 400 PLUS manufactured by Bruker). The styrene unit concentration was calculated from the integral value of the peaks derived from the hydrogen atoms bonded to the carbon atoms at positions 2 to 6 of the aromatic ring included in styrene.

(Proportion of each triad chain in styrene-based copolymer (SX))

A sample solution was prepared by dissolving styrene-based copolymer (SX) in deuterated chloroform and adding 0.5% by mass of chromium (III) acetylacetonate as a relaxation promoter. A $^{13}$C-NMR spectrum was measured for the obtained sample solution using a nuclear magnetic resonance apparatus ("ULTRA SHIELD 400 PLUS", manufactured by Bruker) under the conditions of temperature: 50°C, and measurement mode: reverse gated decoupling method.

From the integral value of the peak (136 to 148 ppm) derived from the carbon atom at position 1 of the aromatic ring included in the styrene-based monomer unit, the proportions of the triad chain of styrene-based monomer unit (S)-styrene-based monomer unit (S)-styrene-based monomer unit (S) (SSS), the triad chain of further monomer unit (X)-styrene-based monomer unit (S)-styrene-based monomer unit (S) (XSS), and the triad chain of further monomer unit (X)-styrene-based monomer unit (S)-further monomer unit (X) (XSX) were calculated. The total amount of the triad chain (SSS), triad chain (XSS), and triad chain (XSX) was taken as 100 mol%.

When the styrene-based copolymer (SX) is an acrylonitrile-styrene copolymer (AS resin), the styrene-based monomer unit (S) is a styrene unit, and the further monomer unit (X) is an acrylonitrile unit. When the styrene-based copolymer (SX) is a styrene-maleic anhydride copolymer (SMA resin), the styrene-based monomer unit (S) is a styrene unit, and the further monomer unit (X) is a maleic anhydride unit. When the styrene-based copolymer (SX) is a methyl methacrylate-styrene-based copolymer (MS resin), the styrene-based monomer unit (S) is a styrene unit, and the further monomer unit (X) is a methyl methacrylate unit.

(Gradient high-performance liquid chromatography (gradient HPLC) analysis)

Gradient high-performance liquid chromatography (gradient HPLC) analysis was performed on the acrylonitrile-styrene copolymer (AS).

A high-performance liquid chromatograph (HPLC system "Prominence LC-20AD") manufactured by Shimadzu Corporation was used as the analytical device. As the column, a silica gel column (inner diameter 4.6 mm φ, length 25 cm) packed with spherical fully porous silica gel with a particle size of 5 μm was used. The column temperature was set to 40°C.

A sample solution with a concentration of 0.5 mg/mL was prepared using chloroform as the solvent. The amount of the sample solution injected into the device was 2 μL.

The components in the sample solution were separated by gradient elution using two eluents, n-hexane and chloroform. A highpressure mixing method was used to mix the two liquids under pressure.

The gradient profile of the mobile phase, where T (minutes) is the time from the start of the analysis (the time when the sample solution was injected into the device), was as follows.

The mobile phase between T = 0 and T = 5 was a mixed solution of n-hexane/chloroform (50% by volume /50% by volume, volume ratio of 1/1).

Between T = 5 and T = 20, the chloroform concentration in the mobile phase was increased from 50% by volume to 100% by volume at a constant rate (50% by volume/15 min) (= n-hexane in the mobile phase was decreased from 50% by volume to 0% by volume at a constant rate (50% by volume/15 min)).

Between T = 20 and T = 25, the mobile phase was 100% by volume chloroform (also referred to as pure chloroform).

Between T = 25 and T = 30, the n-hexane concentration in the mobile phase was increased from 0% by volume to 100% by volume at a constant rate (100% by volume/5 min) (= the chloroform in the mobile phase was decreased from 100% by volume to 0% by volume at a constant rate (100% by volume/5 min)).

The mobile phase between T = 30 and T = 60 was a mixed solution of n-hexane/chloroform (50% by volume/50% by volume, volume ratio of 1/1).

The flow rate of the mobile phase was 0.8 mL/min.

As a detector, an absorbance detector (also referred as a UV detector) with a detection wavelength of 260 nm or an evaporative light scattering (ELS) detector (ELSD-LTII, manufactured by System Instruments Co., Ltd.) was used.

Gradient high-performance liquid chromatography (gradient HPLC) analysis was performed under the same conditions as the case of using the sample solution with 100% by volume chloroform as a blank sample. Based on the baseline gradient of the measurement data from this blank sample, baseline correction was performed on the measurement data for the sample solution to provide a chromatogram of the sample solution.

The elution time of a component is the time from the start of the analysis (the time when the sample solution is injected into the device) to the time when the component is detected (the time to the peak top of the peak derived from the component), and is also referred to as the retention time.

In the obtained chromatogram, the integral values of peaks with elution times of 9 minutes or less, peaks with elution times of 23 minutes or more, and peaks with elution times between 9 and 23 minutes were determined, and from these data the proportion of copolymers with compositions having elution times of 9 minutes or less and the proportion of copolymers with compositions having elution times of 23 minutes or more were calculated.

The elution time of the peak top of the maximum peak (also simply referred to as the elution time of the peak top) and the height (h) of the peak top of the maximum peak from the baseline (also referred to as the peak height (h)) were obtained. In addition, the symmetry factor (S) of the maximum peak was obtained in accordance with JIS K0124.

The symmetry factor (S) is a parameter represented by the following formula.

$$S = (W_{0.05h}) / (2f)$$

In the above formula, $W_{0.05h}$ is the peak width at a height position 5% (1/20) of the peak height (h) from the baseline (also referred to as the peak width at 5% height). f is the width of the rising side of the peak of the bisected peak width when this peak width ($W_{0.05h}$) is bisected by a perpendicular line that passes through the peak top and is perpendicular to the horizontal axis of the chromatogram. The symmetry factor (S) is an index of the symmetry of the peak.

For the relationship between the peak height (h), the peak width at 5% height ($W_{0.05h}$), and the parameter (f), refer to Fig. 1 of Japanese Unexamined Patent Application Publication No. 2016-020435.

(Haze value of 3.0 mm-thick single-layer molded sheet of pulverized material of sheet)

60 g was weighed out from the laminated or single-layer sheet, (L) or (LC), obtained in Examples or Comparative Examples, and pulverized using a pulverizer. Then, the pulverized material was melt-kneaded using a "Labo Plastomill (registered trademark)", manufactured by Toyo Seiki Seisaku-sho, Ltd. under conditions of a screw rotation speed of 70 rpm, a kneading time of 3 minutes, and a kneading temperature of 250°C. Then, using a 50 mm × 150 mm mirror-finished mold, the obtained melt-kneaded material was hot-press molded under conditions of a molding temperature of 250°C to provide a 3.0 mm-thick single-layer molded sheet. The above melt-kneading temperature and molding temperature (both 250°C) are the maximum temperatures of the extruder for the base layer material used in the [Examples] section. The haze value of the obtained single-layer molded sheet was measured using "HM-150" manufactured by MURAKAMI COLOR RESEARCH LABORATORY CO., LTD.

(Haze value of laminated or single-layer sheet, (L) or (LC))

A test piece measuring 50 mm × 50 mm was cut from the center portion in the width direction of the laminated or single-layer sheet, (L) or (LC) obtained in Examples or Comparative Examples, and the haze value was measured using "HM-150" manufactured by MURAKAMI COLOR RESEARCH LABORATORY CO., LTD.

(Phase structure of the base layer)

A test piece with a thickness of 70 nm was cut out from the base layer of the laminated sheet obtained using the rework material and stained with phosphotungstic acid (PTA) as a dye. A field emission scanning electron microscope (FE-SEM) ("JSM-7600F", manufactured by JEOL Ltd.) and its optional transmission electron detector were used to observe a transmission electron microscope image (TEM image) of the phase structure of the base layer, and the results were evaluated according to the following criteria.

When the styrene-based copolymer (S) and the methacrylic-based resin (M) were completely compatible to form a homogeneous phase, the compatibility was determined to be favorable (A).

When a microphase separation structure (sea-island structure) in which a plurality of particulate island phases including the styrene-based copolymer (S) were dispersed in a sea phase including the methacrylic-based resin (M) was confirmed, the largest island phase with the largest diameter among 100 pieces of randomly selected particulate island phases was identified, and the diameter of the largest island phase was determined as the "maximum diameter of a plurality of particulate island phases". When the maximum diameter of the plurality of particulate island phases was more than 0 nm and 50 nm or less, the compatibility was determined to be fair (B), and when the maximum diameter of the plurality of particulate island phases was more than 50 nm, the compatibility was determined to be poor (C).

(Ink adhesion)

Ink adhesion was evaluated for inkjet-printed laminated or single-layer sheets. A 10 mm square evaluation area was cross-cut into 100 squares (10 squares vertically × 10 squares horizontally) spaced 1 mm apart in the vertical and horizontal directions in a printed layer composed of cured white and black UV-curable ink. Cellophane tape was applied to the entire evaluation area, and the tape was rubbed thereon with an eraser to ensure that the tape was firmly attached to the printed surface, and then the tape was peeled off at a 90° angle. Observation was performed using a 10-fold magnifying glass, and the number of squares in which the ink had peeled off from the resin sheet was counted out of the 100 pieces of squares evaluated. The evaluation criteria are as follows:

A (Excellent): No ink peeling was observed in any square;
B (Favorable): Ink peeling was observed in 1 or more and less than 10 pieces of squares.
C (Fair): Ink peeling was observed in 10 or more and less than 50 pieces of squares.
D (Fail): Ink peeling was observed in 50 or more pieces of squares.

(Laser cutting processability)

Laser cutting processability was evaluated for the inkjet-printed laminated or single-layer sheets.

<Appearance of cut surface>

10 pieces of the shaped products obtained after laser cutting were evaluated for defects on the cut surface of a 30 cm straight cut section using an optical microscope observation and a touch test. The main defects are as follows.

Roughness: The cut surface was not uniform overall and felt rough to the touch.
Rough corners: The corners of the cut surface were partially rough and felt rough to the touch.
Resin pools: Molten resin pools were found in a part of the cut surface.
Foreign matter: Colored foreign matter was found on the cut surface.

The evaluation criteria are as follows.

A (Excellent): 0 to 1 piece of shaped product had defects.
B (Favorable): 2 to 4 pieces of shaped products had defects.
C (Fair): 5 to 10 pieces of shaped products had defects.

<Presence or absence of smoke or odor generation>

A sensory evaluation was performed to determine the presence or absence of smoke or odor generation during laser cutting. The evaluation criteria are as follows:

A (favorable): There was a little smoke or odor, but it was not noticeable.
B (Fair): Between A and C.
C (poor): There was noticeable smoke or odor.

[Material]

The materials used are as follows:

(Methacrylic-based resin (M))

<PMMA1> Methyl methacrylate-methyl acrylate copolymer "Parepet", manufactured by Kuraray Co., Ltd. Methyl methacrylate unit content: 94% by mass, methyl acrylate unit content: 6% by mass, styrene unit content: 0% by mass.

(Acrylonitrile-styrene copolymer (AS resin))

<AS1> "Rytac-A 100PCF", manufactured by NIPPON A&L INC., styrene unit content: 77% by mass,

<AS2> "Sunrex AN-C", manufactured by Techno-UMG Co., Ltd., styrene unit content: 76% by mass,
<AS3> "AS S-C-820", manufactured by Denka Company Limited., styrene unit content: 82% by mass,
<AS4> "Denka AS GR-AT-6S", manufactured by Denka Company Limited, styrene unit content: 67% by mass,
<AS5> "Cevian-N 020SF", manufactured by Daicel Miraizu Ltd., styrene unit content: 74% by mass.

(SMA resin (composition))

<SMA1>

"XIRAN23110" manufactured by Polyscope Polymers B.V. (styrene unit content: 77% by mass) was prepared as a styrene-maleic anhydride copolymer (SMA resin).

<SMA/PMMA1>

SMA resin (SMA1) and methacrylic-based resin (PMMA1) were melt-kneaded in a mass proportion of 1:1 to provide an SMA resin composition (SMA/PMMA1) (styrene unit content: 38.5% by mass).

(Methyl methacrylate-styrene-based copolymer (MS resin))

<MS200> "Toyo MS MS200" manufactured by TOYO STYRENE Co., Ltd., styrene unit content: 80% by mass,
<MS600> "Toyo MS MS600" manufactured by TOYO STYRENE Co., Ltd., styrene unit content: 40% by mass.

[Evaluation results of proportion of each triad chain in styrene copolymer (SX)]

Fig. 2 shows a representative $^{13}$C-NMR spectrum of acrylonitrile-styrene copolymer (AS1) measured under the condition of measurement mode: inverse gated decoupling method. Fig. 2 shows each of the peaks (136 to 148 ppm) derived from the carbon atom at position 1 of the aromatic ring included in the styrene unit for triad chain (SSS), triad chain (ASS), and triad chain (ASA). Herein, the symbol A represents an acrylonitrile unit, which is the further monomer unit (X).
Table 1 shows the evaluation results of the proportion of each triad chain in the main styrene-based copolymers (SX) used in Examples and Comparative Examples.

[Table 1]

| Styrene-based copolymer (SX) | AS1 | AS2 | AS3 | SMA1 | AS5 | MS200 |
|---|---|---|---|---|---|---|
| Proportion of SSS chain in styrene-based copolymer (SX) [mol%] | 17.8 | 14.6 | 31.5 | 0 | 10.9 | 46.6 |
| Proportion of XSS chain in styrene-based copolymer (SX) [mol%] | 56.6 | 56.6 | 55.4 | 66.7 | 53.6 | 38.4 |
| Proportion of XSX chain in styrene-based copolymer (SX) [mol%] | 25.6 | 28.8 | 13.1 | 31.2 | 35.5 | 15.0 |

[Gradient HPLC analysis result]

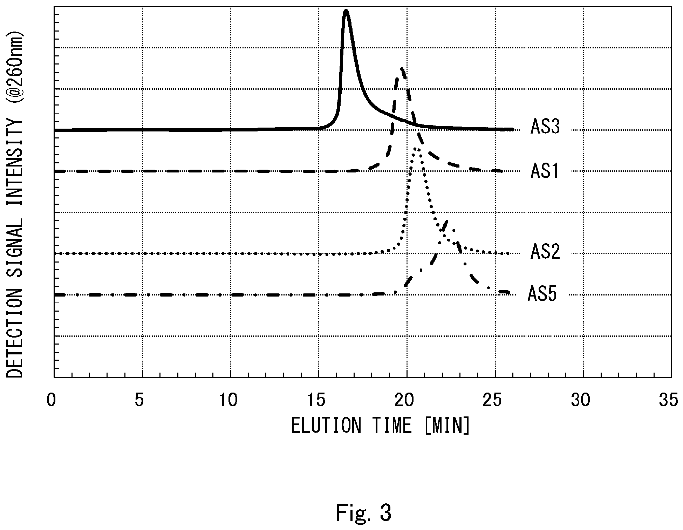

Fig. 3 shows the chromatograms of acrylonitrile-styrene-based copolymers (AS1) to (AS3), and (AS5) after baseline correction when a UV detector with a detection wavelength of 260 nm was used in gradient high-performance liquid chromatography (gradient HPLC) analysis. The gradient HPLC analysis results of these acrylonitrile-styrene-based copolymers are shown in Table 2.

[Table 2]

| Acrylonitrile-styrene copolymer (AS) | | AS1 | AS2 | AS3 | AS5 |
|---|---|---|---|---|---|
| Gradient HPLC analysis UV detector (260 nm) | Content ratio of composition at elution time of 9 minutes or less [%] | 0 | 0 | 0 | 0 |
| | Content ratio of composition at elution time of 23 minutes or more [%] | 2.5 | 2.9 | 0 | 23.6 |
| | Elution time of peak top [min] | 19.7 | 20.6 | 16.6 | 22.4 |
| | Peak width at 5% height (WO.05h) [min] | 4.9 | 4.3 | 4.5 | 5.8 |
| | Symmetry factor (S) | 1.5 | 1.6 | 2.7 | 1.0 |

(continued)

| Acrylonitrile-styrene copolymer (AS) | | AS1 | AS2 | AS3 | AS5 |
|---|---|---|---|---|---|
| Gradient HPLC analysis ELSD detector | Elution time of peak top [min] | 19.9 | 20.7 | 16.8 | 22.6 |
| | Peak width at 5% height (WO.05h) [min] | 2.2 | 2.5 | 2.7 | 3.8 |
| | Symmetry factor (S) | 1.6 | 1.6 | 2.7 | 1.0 |

[Production of laminated or single-layer sheets]

(Examples (E1-V) to (E9-V) and Comparative Examples (EC10-V) to (EC12-V) and (EC15-V) to (EC17-V))

As the base layer material. a virgin methacrylic-based resin (M) was melted using a 150 mm φ single-screw extruder manufactured by Toshiba Machine Co., Ltd. (maximum temperature of the cylinder portion was 250°C). As the surface layer material, a virgin styrene-based copolymer (S) was melted using a 65 mm φ single-screw extruder manufactured by Toshiba Machine Co., Ltd. (maximum temperature of the cylinder portion was 240°C). Using a multi-manifold die, the molten styrene copolymer (S), the molten methacrylic-based resin (M), and the molten styrene-based copolymer (S) were laminated in this order, extruded from a T-die, cooled using four adjacent cooling rolls, and taken up by a take-up roll. The above co-extrusion forming produced two-type three-layer laminated sheets (L1-V) to (L9-V), (LC10-V) to (LC12-V), (LC15-V) to (LC17-V) of styrene-based copolymer (S) (first surface layer)/methacrylic-based resin (M) (base layer)/styrene-based copolymer (S) (second surface layer).

Main production conditions and various parameter values are shown in Tables 3 and 6. In these tables, conditions not listed in the tables were common conditions. The first surface layer and second surface layer had the same composition and thickness. The thickness of each surface layer was half the "total thickness of the surface layers" listed in Tables 3 and 6.

(Comparative Examples (EC13-V) and (EC14-V))

A virgin styrene-based copolymer (S) or virgin methacrylic-based resin (M) was melted using a Toshiba Machine Co., Ltd. using 150 mm φ single-screw extruder (maximum cylinder temperature was 250°C). The molten resin was extruded from a T-die, cooled using four adjacent cooling rolls, and taken up by a take-up roll. The above extrusion forming produced single-layer sheets (LC13-V) and (LC14-V). The main production conditions and various parameter values are shown in Table 6.

(Examples (E1-1) to (E1-3))

Laminated sheets (L1-1) to (L1-3) were obtained in the same manner as in Example (E1-V), except that at least a part (30% by mass, 50% by mass, or 100% by mass) of the base layer material was replaced with the pulverized material of the laminated sheet, obtained in Example (E1-V) as a rework material. The main production conditions and various parameter values are shown in Table 4.

The virgin methacrylic-based resin (M) and the rework material were mixed by dry blending. The same applies to the other examples.

(Examples (E2-1) to (E2-3))

Laminated sheets (L2-1) to (L2-3) were obtained in the same manner as in Example (E2-V), except that at least a part (30% by mass, 50% by mass, or 100% by mass) of the base layer material was replaced with the pulverized material of the laminated sheet obtained in Example (E2-V) as a rework material. The main production conditions and various parameter values are shown in Table 4.

(Examples (E3-1) and (E3-2))

Laminated sheets (L3-1) and (L3-2) were obtained in the same manner as in Example (E3-V), except that a part (30% by mass or 40% by mass) of the base layer material was replaced with the pulverized material of the laminated sheet obtained in Example (E3-V) as a rework material. The main production conditions and various parameter values are shown in Table 4.

(Examples (E4-1) to (E4-3))

Laminated sheets (L4-1) to (L4-3) were obtained in the same manner as in Example (E4-V), except that at least a part (30% by mass, 50% by mass, or 100% by mass) of the base layer material was replaced with the pulverized material of the laminated sheet obtained in Example (E4-V) as a rework material. The main production conditions and various parameter values are shown in Table 4.

(Example (E5-1))

A laminated sheet (L5-1) was obtained in the same manner as in Example (E5-V), except that a part (50% by mass) of the base layer material was replaced with the pulverized material of the laminated sheet obtained in Example (E5-V) as a rework material. The main production conditions and various parameter values are shown in Table 5.

(Examples (E6-1) to (E6-3))

A laminated sheet was obtained in the same manner as in Example (E6-V), except that at least a part (30% by mass, 50% by mass, or 100% by mass) of the base layer material was replaced with the pulverized material of the laminated sheet obtained in Example (E6-V) as a rework material. The main production conditions and various parameter values are shown in Table 5.

(Example (E7-1))

A laminated sheet (L7-1) was obtained in the same manner as in Example (E7-V), except that a part (50% by mass) of the base layer material was replaced with the pulverized material of the laminated sheet obtained in Example (E7-V) as a rework material. The main production conditions and various parameter values are shown in Table 5.

(Examples (E8-1) to (E8-3))

A laminated sheet was obtained in the same manner as in Example (E8-V), except that at least a part (30% by mass, 50% by mass, or 100% by mass) of the base layer material was replaced with the pulverized material of the laminated sheet obtained in Example (E8-V) as a rework material. The main production conditions and various parameter values are shown in Table 5.

(Example (E9-1))

A laminated sheet (L9-1) was obtained in the same manner as in Example (E9-V), except that a part (50% by mass) of the base layer material was replaced with the pulverized material of the laminated sheet obtained in Example (E9-V) as a rework material. The main production conditions and various parameter values are shown in Table 5.

(Comparative Examples (EC10-1), (EC11-1), (EC12-1), and (EC15-1))

A laminated sheet (LC10-1), (LC11-1), (LC12-1), or (LC15-1) was obtained in the same manner as in Comparative Example (EC10-V), (EC11-V), (EC12-V), or (EC15-V), except that a part (30% by mass) of the base layer material was replaced with the pulverized material of the laminated sheet obtained in Comparative Examples (EC10-V), (EC11-V), (EC12-V), or (EC15-V) as a rework material. The main production conditions and various parameter values are shown in Table 7.

(Comparative Examples (EC16-1) to (EC16-3))

Laminated sheets (LC16-1) to (LC16-3) were obtained in the same manner as in Comparative Example (EC16-V), except that at least a part (30% by mass, 50% by mass, or 100% by mass) of the base layer material was replaced with the pulverized material of the laminated sheet obtained in Comparative Example (EC16-V) as a rework material. The main production conditions and various parameter values are shown in Table 7.

(Comparative Examples (EC17-1) to (EC17-3))

Laminated sheets were obtained in the same manner as in Comparative Example (EC17-V), except that at least a part (30% by mass, 50% by mass, or 100% by mass) of the base layer material was replaced with the pulverized material of the laminated sheet obtained in Comparative Example (EC17-V) as a rework material. The main production conditions and various parameter values are shown in Table 7.

[Inkjet printing]

Inkjet printing was performed on one surface of the laminated or single-layer sheet obtained in each example under the following conditions, and the described-above ink adhesion was evaluated. The printing pattern was a solid printing in a substantially elliptical shape with a minor axis of 1.8 cm and a major axis of 2.8 cm.

Apparatus: "LEF-300", manufactured by Roland DG Corporation, Temperature: Room temperature (20 to 25°C),
UV curable ink (white): EUV-BK, manufactured by Roland DG Corporation,
UV curable ink (black): EUV-WH, manufactured by Roland DG Corporation.

[Laser cutting]

Laser cutting was performed on the laminated or single-layer sheet after the inkjet printing under the following conditions to provide a shaped product in the shape of a TV anime character with a minor axis of 20 mm and a major axis of 30 mm and a curved cut portion with a radius of 1 mm.

Apparatus: SEI "MERCURY609"
Temperature: Room temperature (20 to 30°C)
Laser type: Carbon dioxide laser
Laser output: 200 W
Cutting speed: 350 to 400 cm/min

[Evaluation Result]

The evaluation results are shown in Tables 3 to 7.

[Table 3]

| | | E1-V | E2-V | E3-V | E4-V | E5-V | E6-V | E7-V | E8-V | E9-V |
|---|---|---|---|---|---|---|---|---|---|---|
| Example | | E1-V | E2-V | E3-V | E4-V | E5-V | E6-V | E7-V | E8-V | E9-V |
| Laminated sheet (L) | | L1-V | L2-V | L3-V | L4-V | L5-V | L6-V | L7-V | L8-V | L9-V |
| Surface layer | Styrene-based copolymer (S) (composition) | AS1 | AS1 | AS1 | AS2 | AS2 | AS3 | AS3 | SMA/PMMA1 | SMA/PMMA1 |
| | Styrene unit concentration in surface layer [% by mass] | 77 | 77 | 77 | 76 | 76 | 82 | 82 | 39 | 39 |
| | Total thickness [mm] | 0.3 | 0.1 | 0.6 | 0.3 | 0.1 | 0.3 | 0.1 | 0.3 | 0.1 |
| Base layer | Type of methacrylic-based resin (M) (virgin material) | PMMA1 | PMMA1 | PMMA1 | PMMA1 | PMMA1 | PMMA1 | PMMA1 | PMMA1 | PMMA1 |
| | Proportion of methacrylic-based resin (M) (virgin material) [% by mass] | 100 | 100 | 100 | 100 | 100 | 100 | 100 | 100 | 100 |
| | Type of rework material | - | - | - | - | - | - | - | - | - |
| | Styrene unit concentration in rework material [% by mass] | 0 | 0 | 0 | 0 | 0 | 0 | 0 | 0 | 0 |
| | Proportion of rework material [% by mass] | 0 | 0 | 0 | 0 | 0 | 0 | 0 | 0 | 0 |
| | Styrene unit concentration in base layer [% by mass] | 0 | 0 | 0 | 0 | 0 | 0 | 0 | 0 | 0 |
| | Thickness [mm] | 2.7 | 2.9 | 2.4 | 2.7 | 2.9 | 2.7 | 2.9 | 2.7 | 2.9 |
| Total thickness of laminated sheet [mm] | | 3.0 | 3.0 | 3.0 | 3.0 | 3.0 | 3.0 | 3.0 | 3.0 | 3.0 |
| Ratio of laminated thickness (surface layer : base layer) | | 10:90 | 3.3:96.7 | 20:80 | 10:90 | 3.3:96.7 | 10:90 | 3.3:96.7 | 10:90 | 3.3:96.7 |
| Average styrene unit concentration of laminated sheet [% by mass] | | 7.7 | 2.6 | 15.4 | 7.6 | 2.5 | 8.2 | 2.7 | 3.9 | 1.3 |
| Haze of single-layer molded sheet of pulverized sheet [%] | | 0.1 | 0.1 | 0.1 | 0.1 | 0.1 | 0.1 | 0.1 | 0.1 | 0.1 |
| Haze of laminated sheet (L) [%] | | 0.1 | 0.1 | 0.1 | 0.1 | 0.1 | 0.1 | 0.1 | 0.1 | 0.1 |
| Ink adhesion | | A | A | A | A | A | A | A | B | B |
| Laser cutting processability | | | | | | | | | | |
| | Appearance of cut surface | A | A | B | A | A | A | A | A | A |
| | Smoke and odor | A | A | B | A | A | A | A | A | A |

EP 4 640 431 A1

[Table 4]

| | Example | E1-1 | E1-2 | E1-3 | E2-1 | E2-2 | E2-3 | E3-1 | E3-2 | E4-1 | E4-2 | E4-3 |
|---|---|---|---|---|---|---|---|---|---|---|---|---|
| | Laminated sheet (L) | L1-1 | L1-2 | L1-3 | L2-1 | L2-2 | L2-3 | L3-1 | L3-2 | L4-1 | L4-2 | L4-3 |
| Surface layer | Styrene-based copolymer (S) (composition) | AS1 | AS1 | AS1 | AS1 | AS1 | AS1 | AS1 | AS1 | AS2 | AS2 | AS2 |
| | Styrene unit concentration in surface layer [% by mass] | 77 | 77 | 77 | 77 | 77 | 77 | 77 | 77 | 76 | 76 | 76 |
| | Total thickness [mm] | 0.3 | 0.3 | 0.3 | 0.1 | 0.1 | 0.1 | 0.6 | 0.6 | 0.3 | 0.3 | 0.3 |
| Base layer | Type of methacrylic-based resin (M) (virgin material) | PMMA1 | PMMA1 | - | PMMA1 | PMMA1 | - | PMMA1 | PMMA1 | PMMA1 | PMMA1 | - |
| | Proportion of methacrylic-based resin (M) (virgin material) [% by mass] | 70 | 50 | 0 | 70 | 50 | 0 | 70 | 60 | 70 | 50 | 0 |
| | Type of rework material | L1-V | L1-V | L1-V | L2-V | L2-V | L2-V | L3-V | L3-V | L4-V | L4-V | L4-V |
| | Styrene unit concentration in rework material [% by mass] | 7.7 | 7.7 | 7.7 | 2.6 | 2.6 | 2.6 | 15.4 | 15.4 | 7.6 | 7.6 | 7.6 |
| | Proportion of rework material [% by mass] | 30 | 50 | 100 | 30 | 50 | 100 | 30 | 40 | 30 | 50 | 100 |
| | Styrene unit concentration in base layer [% by mass] | 2.3 | 3.9 | 7.7 | 0.8 | 1.3 | 2.6 | 4.6 | 6.2 | 2.3 | 3.8 | 7.6 |
| | Thickness [mm] | 2.7 | 2.7 | 2.7 | 2.9 | 2.9 | 2.9 | 2.4 | 2.4 | 2.7 | 2.7 | 2.7 |
| Total thickness of laminated sheet [mm] | | 3.0 | 3.0 | 3.0 | 3.0 | 3.0 | 3.0 | 3.0 | 3.0 | 3.0 | 3.0 | 3.0 |
| Ratio of laminated thickness (surface layer : base layer) | | 10:90 | 10:90 | 10:90 | 3.3:96.7 | 3.3:96.7 | 3.3:96.7 | 20:80 | 20:80 | 10:90 | 10:90 | 10:90 |
| Average styrene unit concentration of laminated sheet [% by mass] | | 9.8 | 11.2 | 14.6 | 3.3 | 3.8 | 5.0 | 19.1 | 20.3 | 9.7 | 11.0 | 14.4 |
| Phase structure of base layer | | A | A | A | A | A | A | A | A | A | A | A |
| Haze of single-layer molded sheet of pulverized sheet [%] | | 0.1 | 0.1 | 0.1 | 0.1 | 0.1 | 0.1 | 0.1 | 0.1 | 0.1 | 0.1 | 0.1 |
| Haze of laminated sheet (L) [%] | | 0.1 | 0.1 | 0.1 | 0.1 | 0.1 | 0.1 | 0.1 | 0.1 | 0.1 | 0.1 | 0.1 |
| Ink adhesion | | A | A | A | A | A | A | A | A | A | A | A |
| Laser cutting processability | | | | | | | | | | | | |
| | Appearance of cut surface | A | A | A | A | A | A | B | B | A | A | A |
| | Smoke and odor | A | A | A | A | A | A | B | B | A | A | A |

EP 4 640 431 A1

[Table 5]

| | Example | E5-1 | E6-1 | E6-2 | E6-3 | E7-1 | E8-1 | E8-2 | E8-3 | E9-1 |
|---|---|---|---|---|---|---|---|---|---|---|
| | Laminated sheet (L) | L5-1 | L6-1 | L6-2 | L6-3 | L7-1 | L8-1 | L8-2 | L8-3 | L9-1 |
| Surface layer | Styrene-based copolymer (S) (composition) | AS2 | AS3 | AS3 | AS3 | AS3 | SMA/PMMA1 | SMA/PMMA1 | SMA/PMMA1 | SMA/PMMA1 |
| | Styrene unit concentration in surface layer [% by mass] | 76 | 82 | 82 | 82 | 82 | 39 | 39 | 39 | 39 |
| | Total thickness [mm] | 0.1 | 0.3 | 0.3 | 0.3 | 0.1 | 0.3 | 0.3 | 0.3 | 0.1 |
| Base layer | Type of methacrylic-based resin (M) (virgin material) | PMMA1 | PMMA1 | PMMA1 | - | PMMA1 | PMMA1 | PMMA1 | - | PMMA1 |
| | Proportion of methacrylic-based resin (M) (virgin material) [% by mass] | 50 | 70 | 50 | 0 | 50 | 70 | 50 | 0 | 50 |
| | Type of rework material | L5-V | L6-V | L6-V | L6-V | L7-V | L8-V | L8-V | L8-V | L9-V |
| | Styrene unit concentration in rework material [% by mass] | 2.5 | 8.2 | 8.2 | 8.2 | 2.7 | 3.9 | 3.9 | 3.9 | 1.3 |
| | Proportion of rework material [% by mass] | 50 | 30 | 50 | 100 | 50 | 30 | 50 | 100 | 50 |
| | Styrene unit concentration in base layer [% by mass] | 1.3 | 2.5 | 4.1 | 8.2 | 1.4 | 1.2 | 1.9 | 3.9 | 0.6 |
| | Thickness [mm] | 2.9 | 2.7 | 2.7 | 2.7 | 2.9 | 2.7 | 2.7 | 2.7 | 2.9 |
| Total thickness of laminated sheet [mm] | | 3.0 | 3.0 | 3.0 | 3.0 | 3.0 | 3.0 | 3.0 | 3.0 | 3.0 |
| Ratio of laminated thickness (surface layer : base layer) | | 3.3:96.7 | 10:90 | 10:90 | 10:90 | 3.3:96.7 | 10:90 | 10:90 | 10:90 | 3.3:96.7 |
| Average styrene unit concentration of laminated sheet [% by mass]] | | 3.8 | 10.4 | 11.9 | 15.6 | 4.1 | 4.9 | 5.6 | 7.3 | 1.9 |
| Phase structure of base layer | | | A | A | A | | A | A | A | |
| Haze of single-layer molded sheet of pulverized sheet [%] | | 0.1 | 0.1 | 0.1 | 0.1 | 0.1 | 0.1 | 0.1 | 0.1 | 0.1 |
| Haze of laminated sheet (L) [%] | | 0.1 | 0.1 | 0.1 | 0.1 | 0.1 | 0.1 | 0.1 | 0.1 | 0.1 |
| Ink adhesion | | A | A | A | A | A | B | B | B | B |
| Laser cutting processability | | | | | | | | | | |

EP 4 640 431 A1

22

(continued)

| Example | E5-1 | E6-1 | E6-2 | E6-3 | E7-1 | E8-1 | E8-2 | E8-3 | E9-1 |
|---|---|---|---|---|---|---|---|---|---|
| Appearance of cut surface | A | A | A | A | A | A | A | A | A |
| Smoke and odor | A | A | A | A | A | A | A | A | A |

[Table 6]

| Comparative Example | | EC10-V | EC11-V | EC12-V | EC13-V | EC14-V | EC15-V | EC16-V | EC17-V |
|---|---|---|---|---|---|---|---|---|---|
| Laminated or single-layer sheet (LC) | | LC10-V | LC11-V | LC12-V | LC13-V | LC14-V | LC15-V | LC16-V | LC17-V |
| Surface layer | Styrene-based copolymer (S) (composition) | AS4 | MS200 | MS200 | MS600 | - | AS1 | AS5 | AS5 |
| | Styrene unit concentration in surface layer [% by mass] | 67 | 80 | 80 | 40 | - | 77 | 74 | 74 |
| | Total thickness [mm] | 0.3 | 0.3 | 0.1 | 3.0 | 0 | 1.0 | 0.3 | 0.1 |
| Base layer | Type of methacrylic-based resin (M) (virgin material) | PMMA1 | PMMA1 | PMMA1 | - | PMMA1 | PMMA1 | PMMA1 | PMMA1 |
| | Proportion of methacrylic-based resin (M) (virgin material) [% by mass] | 100 | 100 | 100 | - | 100 | 100 | 100 | 100 |
| | Type of rework material | - | - | - | - | - | - | - | - |
| | Styrene unit concentration in rework material [% by mass] | 0 | 0 | 0 | 0 | 0 | 0 | 0 | 0 |
| | Proportion of rework material [% by mass] | 0 | 0 | 0 | 0 | 0 | 0 | 0 | 0 |
| | Styrene unit concentration in base layer [% by mass] | 0 | 0 | 0 | 0 | 0 | 0 | 0 | 0 |
| | Thickness [mm] | 2.7 | 2.7 | 2.9 | 0 | 3.0 | 2.0 | 2.7 | 2.9 |
| Total thickness of laminated sheet [mm] | | 3.0 | 3.0 | 3.0 | 3.0 | 3.0 | 3.0 | 3.0 | 3.0 |
| Ratio of laminated thickness (surface layer : base layer) | | 10:90 | 10:90 | 3.3:96.7 | 100:0 | 0:100 | 33:67 | 10:90 | 3.3:96.7 |
| Average styrene unit concentration of laminated sheet [% by mass] | | 6.7 | 8.0 | 2.7 | 40.0 | 0 | 25.7 | 7.4 | 2.5 |

(continued)

| Comparative Example | | EC10-V | EC11-V | EC12-V | EC13-V | EC14-V | EC15-V | EC16-V | EC17-V |
|---|---|---|---|---|---|---|---|---|---|
| Haze of single-layer molded sheet of pulverized sheet [%] | | 99.6 | 100.0 | 50.0 | 0.1 | 0.1 | 0.1 | 52.4 | 17.3 |
| Haze of laminated or single-layer sheet (LC) [%] | | 0.1 | 0.1 | 0.1 | 0.1 | 0.1 | 0.1 | 0.1 | 0.1 |
| Ink adhesion | | B | A | A | B | D | A | A | A |
| Laser cutting processability | | | | | | | | | |
| | Appearance of cut surface | A | A | A | C | A | C | A | A |
| | Smoke and odor | A | A | A | C | A | C | A | A |

[Table 7]

| | | EC10-1 | EC11-1 | EC12-1 | EC15-1 | EC16-1 | EC16-2 | EC16-3 | EC17-1 | EC17-2 | EC17-3 |
|---|---|---|---|---|---|---|---|---|---|---|---|
| Comparative Example | | EC10-1 | EC11-1 | EC12-1 | EC15-1 | EC16-1 | EC16-2 | EC16-3 | EC17-1 | EC17-2 | EC17-3 |
| Laminated sheet (LC) | | LC10-1 | LC11-1 | LC12-1 | LC15-1 | LC16-1 | LC16-2 | LC16-3 | LC17-1 | LC17-2 | LC17-3 |
| Surface layer | Styrene-based copolymer (S) (composition) | AS4 | MS200 | MS200 | AS1 | AS5 | AS5 | AS5 | AS5 | AS5 | AS5 |
| | Styrene unit concentration in surface layer [% by mass] | 67 | 80 | 80 | 77 | 74 | 74 | 74 | 74 | 74 | 74 |
| | Total thickness [mm] | 0.3 | 0.3 | 0.1 | 1.0 | 0.3 | 0.3 | 0.3 | 0.1 | 0.1 | 0.1 |
| | Type of methacrylic-based resin (M) (virgin material) | PMMA1 | PMMA1 | PMMA1 | PMMA1 | PMMA1 | PMMA1 | - | PMMA1 | PMMA1 | - |
| | Proportion of methacrylic-based resin (M) (virgin material) [% by mass] | 70 | 70 | 70 | 70 | 70 | 50 | 0 | 70 | 50 | 0 |
| Base layer | Type of rework material | LC10-V | LC11-V | LC12-V | LC15-V | LC16-V | LC16-V | LC16-V | LC17-V | LC17-V | LC17-V |
| | Styrene unit concentration in rework material [% by mass] | 6.7 | 8.0 | 2.7 | 25.7 | 7.4 | 7.4 | 7.4 | 2.5 | 2.5 | 2.5 |
| | Proportion of rework material [% by mass] | 30 | 30 | 30 | 30 | 30 | 50 | 100 | 30 | 50 | 100 |
| | Styrene unit concentration in base layer [% by mass] | 2.0 | 2.4 | 0.8 | 7.7 | 2.2 | 3.7 | 7.4 | 0.7 | 1.2 | 2.5 |
| | Thickness [mm] | 2.7 | 2.7 | 2.9 | 2.0 | 2.7 | 2.7 | 2.7 | 2.9 | 2.9 | 2.9 |
| Total thickness of laminated sheet [mm] | | 3.0 | 3.0 | 3.0 | 3.0 | 3.0 | 3.0 | 3.0 | 3.0 | 3.0 | 3.0 |
| Ratio of laminated thickness (surface layer : base layer) | | 10:90 | 10:90 | 3.3:96.7 | 33:67 | 10:90 | 10:90 | 10:90 | 3.3:96.7 | 3.3:96.7 | 3.3:96.7 |
| Average styrene unit concentration of laminated sheet [% by mass] | | 8.5 | 10.2 | 3.4 | 30.8 | 9.4 | 10.7 | 14.1 | 3.2 | 3.7 | 4.9 |
| Phase structure of base layer | | C | C | | | C | C | C | C | C | C |
| Haze of single-layer molded sheet of pulverized sheet [%] | | 100.0 | 100.0 | 50.0 | 0.1 | 52.4 | 52.4 | 52.4 | 17.3 | 17.3 | 17.3 |
| Haze of laminated sheet (LC) [%] | | 35.0 | 50.0 | 45.0 | 0.1 | 14.2 | 23.6 | 47.2 | 4.7 | 8.0 | 15.6 |
| Ink adhesion | | B | A | A | A | A | A | A | A | A | A |
| Laser cutting processability | Appearance of cut surface | A | A | A | C | A | A | A | A | A | A |
| | Smoke and odor | A | A | A | C | A | A | A | A | A | A |

26

In Examples (E1-V) to (E9-V), only virgin material was used for the base layer and surface layer. In these examples, an acrylonitrile-styrene copolymer (AS resin) including 75 to 95% by mass styrene units, or a styrene-maleic anhydride copolymer (SMA resin) including 60 to 95% by mass styrene units was used as the styrene-based copolymer (S).

In these Examples, the base layer including the methacrylic-based resin (M), on both sides of which the surface layers including the styrene-based copolymer (S) was laminated, thereby producing the laminated sheet in which the proportion of the total thickness of the surface layers to the total thickness of the laminated sheet was 1 to 20%.

All of the laminated sheets obtained in these examples exhibited favorable ink adhesion and laser cutting processability, a haze value of 1% or less, and favorable transparency.

The styrene-based copolymer (S) used in these examples had favorable compatibility with the methacrylic-based resin (M), and the haze values of the 3.0 mm-thick single-layer molded sheets of the pulverized material of the laminated sheets obtained were all 1% or less, and the transparency was favorable. In these examples, laminated sheets with excellent sustainability that can be used as rework materials were obtained.

In Examples (E1-1) to (E1-3), laminated sheets were obtained in the same manner as in Example (E1-V), except that 30 to 100% by mass of the total raw materials of the base layer were replaced with a rework material composed of the pulverized material of the laminated sheet obtained in Example (E1-V). All of the obtained laminated sheets exhibited favorable ink adhesion and laser cutting processability, a haze value of 1% or less, and favorable transparency. Even when a large amount of the rework material was used, a high-quality laminated sheet was obtained, as in Example using only virgin material. In these examples, a laminated sheet including the rework material and having excellent sustainability was obtained.

Similar results were obtained in other examples shown in Tables 4 and 5.

The styrene-based copolymers (S) used in the examples shown in Tables 3 to 5 were all styrene-based copolymers (SX) having a triad chain (SSS) proportion of 0 to 40 mol% and a triad chain (XSX) proportion of 5 to 34 mol%.

When the acrylonitrile-styrene copolymers (AS) used in the examples shown in Tables 3 to 5 were subjected to gradient high-performance liquid chromatography (gradient HPLC) analysis using two eluents, n-hexane and chloroform, the result showed all acrylonitrile-styrene copolymers (AS-E) in which the proportion of the copolymer having a composition with an elution time of 9 minutes or less was 0 to 5% by mass, the proportion of the copolymer having a composition with an elution time of 23 minutes or more was 0 to 5% by mass, and the elution time of the peak top of the maximum peak in the chromatogram was 9 to 23 minutes.

All of the styrene-based copolymers (S) used in the examples shown in Tables 4 and 5 had favorable compatibility with the methacrylic-based resin (M). Therefore, it was confirmed in transmission electron microscope (TEM) images that the base layer of the laminated sheet obtained in these examples had a completely compatible structure of the styrene-based copolymer (S) and the methacrylic-based resin (M).

In Comparative Examples (EC10-V) to (EC12-V), (EC16-V), and (EC17-V), only virgin material was used as the material for the base layer and surface layer. The styrene-based copolymer (S) used in these examples had poor compatibility with the methacrylic-based resin (M), and the haze values of the 3.0 mm-thick single-layer molded sheets of the pulverized materials from the obtained laminated sheets were all extremely high, ranging from 17 to 100%, and the transparency was extremely poor. In these examples, laminated sheets with excellent sustainability that could be used as rework materials were not obtained.

**In** Comparative Example (EC10-1), a laminated sheet was obtained in the same manner as in Comparative Example (EC10-V), except that 30% by mass of the total raw materials of the base layer was replaced with a rework material composed of the pulverized material of the laminated sheet obtained in Comparative Example (EC10-V). The obtained laminated sheet had an extremely high haze value and extremely poor transparency. **In** this Comparative Example, when the rework material was included, a laminated sheet with excellent transparency and sustainability was not obtained.

Similar results were obtained in Comparative Examples (EC11-1), (EC12-1), (EC16-1) to (EC16-3), and (EC17-1) to (EC17-3).

The styrene-based copolymers (S) used in Comparative Examples (EC10-1), (EC11-1), (EC12-1), (EC16-1) to (EC16-3), and (EC17-1) to (EC17-3) all had poor compatibility with the methacrylic-based resin (M). Therefore, the base layers of the laminated sheets obtained in these comparative examples had a sea-island structure in which a plurality of particulate island phases including the styrene-based copolymer (S) and the methacrylic-based resin (M) were dispersed in a sea phase including the methacrylic-based resin (M), and the maximum diameter of the plurality of particulate island phases exceeded 50 nm, resulting in a poor phase structure.

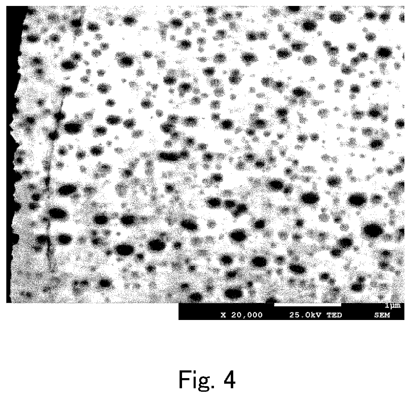

Fig. 4 shows an example of an electron microscope image of a sea-island structure in which the maximum diameter of the plurality of particulate island phases exceeds 50 nm. Fig. 4 is a transmission electron microscope (TEM image) that shows the phase structure (sea-island structure) of the base layer included in the laminated sheet obtained in Comparative Example (EC16-3). Each island phase in this TEM image included acrylonitrile-styrene copolymer (AS5) and a small amount of methacrylic-based resin (PMMA1) that was dissolved therein.

The single-layer sheet composed of the styrene-based copolymer (S) in Comparative Example (EC13-V) had favorable ink adhesion, but poor laser cutting processability due to the high content of styrene-based monomer units in the laminated sheet.

The single-layer sheet composed of the methacrylic-based resin (M) without an aromatic ring structure in the molecule in Comparative Example (EC14-V) had favorable laser cutting processability, but poor ink adhesion due to the lack of a surface layer including the styrene-based copolymer (S).

The laminated sheets obtained in Comparative Examples (EC15-V) and (EC15-1), in which the proportion of the total thickness of the surface layer to the total thickness of the laminated sheet was more than 20%, had favorable ink adhesion, but poor laser cutting processability due to the high content of styrene-based monomer units in the laminated sheet.

The invention is not limited to the above-described embodiments and examples, and appropriate design modifications are possible without departing from the spirit of the present invention.

This application claims priority based on Japanese Patent Application No. 2022-205089 filed on December 22, 2022, Japanese Patent Application No. 2023-084294 filed on May 23, 2023, Japanese Patent Application No. 2023-129664 filed on August 9, 2023, and Japanese Patent Application No. 2023-191424 filed on November 9, 2023, the entire disclosures of which are incorporated herein by reference.

**Reference Signs List**

1       LAMINATED SHEET
2       BASE LAYER
21, 22    SURFACE LAYER

**Claims**

1.  A laminated sheet comprising:

    a base layer; and
    a surface layer laminated on at least one side of the base layer, wherein
    the base layer includes a methacrylic-based resin (M) including 80 to 100% by mass of methyl methacrylate units,
    the surface layer includes a styrene-based copolymer (S),
    a proportion of a total thickness of the surface layer to a total thickness of the laminated sheet is 1 to 20%, and
    a haze value of a 3.0 mm-thick single-layer molded sheet of a pulverized material of the laminated sheet is 4% or less.

2.  The laminated sheet according to claim 1, wherein the styrene-based copolymer (S) is one or more styrene-based copolymers selected from the group consisting of an acrylonitrile-styrene copolymer (AS), a styrene-maleic anhydride copolymer (SMA), and a styrene-maleic anhydride-methyl methacrylate copolymer (SMM).

3.  The laminated sheet according to claim 1, wherein a content of styrene-based monomer units in the laminated sheet is 0.1 to 25% by mass.

4.  The laminated sheet according to claim 1, wherein

    the styrene-based copolymer (S) includes a styrene-based copolymer (SX) that is a binary copolymer of a styrene-based monomer unit (S) and a further monomer unit (X), and
    when proportions of a triad chain of styrene-based monomer unit (S)-styrene-based monomer unit (S)-styrene-based monomer unit (S) (SSS), a triad chain of further monomer unit (X)-styrene-based monomer unit (S)-styrene-based monomer unit (S) (XSS), and a triad chain of further monomer unit (X)-styrene-based monomer unit (S)-further monomer unit (X) (XSX) are determined from $^{13}$C-NMR spectra measured under conditions of measurement mode: an inverse gated decoupling method, the styrene-based copolymer (SX) has a proportion of the triad chain (SSS) of 0 to 40 mol% and a proportion of the triad chain (XSX) of 5 to 34 mol% with respect to 100 mol% in total of the triad chain (SSS), the triad chain (XSS), and the triad chain (XSX).

5.  The laminated sheet according to claim 1, wherein the styrene-based copolymer (S) comprises an acrylonitrile-styrene copolymer (AS-E) in which, when gradient high-performance liquid chromatography analysis is performed under the following conditions using two eluents, n-hexane and chloroform, a proportion of a copolymer having a composition with an elution time of 9 minutes or less is 0 to 5% by mass, a proportion of a copolymer having a composition with an elution time of 23 minutes or more is 0 to 5% by mass, and an elution time of a maximum peak of chromatogram is 9 to 23 minutes,

<Conditions for gradient high-performance liquid chromatography analysis>
as a column, a silica gel column having an inner diameter of 4.6 mm φ and a length of 25 cm and packed with spherical fully porous silica gel with a particle size of 5 μm is used; a column temperature is set to 40°C; and a sample solution with a concentration of 0.5 mg/mL is prepared using chloroform as a solvent;
a gradient profile of a mobile phase, where T (minutes) is time from start of analysis, is as follows:

the mobile phase from T = 0 to T = 5 is a mixed solution of n-hexane/chloroform (50% by volume/50% by volume);
from T = 5 to T = 20, a chloroform concentration in the mobile phase is increased at a constant rate from 50% by volume to 100% by volume;
from T = 20 to T = 25, the mobile phase is 100% by volume chloroform;
a flow rate of the mobile phase is 0.8 mL/min; and
an absorbance detector with a detection wavelength of 260 nm is used as a detector.

6. The laminated sheet according to claim 1, wherein the base layer includes a methacrylic-based resin composition (MR) containing a methacrylic-based resin (M) and a styrene-based copolymer (S).

7. The laminated sheet according to claim 6, wherein the base layer has a completely compatible structure of the styrene-based copolymer (S) and the methacrylic-based resin (M), or a sea-island structure in which a plurality of particulate island phases containing the styrene-based copolymer (S) are dispersed in a sea phase containing the methacrylic-based resin (M), and a maximum diameter of the plurality of particulate island phases is more than 0 nm and 50 nm or less.

8. The laminated sheet according to claim 6, wherein a content of a styrene-based monomer unit in the base layer is 0.5 to 10.0% by mass.

9. The laminated sheet according to claim 6, wherein at least a part of all raw materials of the base layer is a recycled resin composition (R) composed of a pulverized material of the laminated sheet previously produced or a processed material of the pulverized material.

10. The laminated sheet according to claim 1, wherein a total thickness of the laminated sheet is 1 to 10 mm.

11. The laminated sheet according to claim 1, for inkjet printing and/or laser cutting.

12. The laminated sheet according to claim 1, being a co-extrusion formed sheet.

13. A printed matter obtained by subjecting the surface layer of the laminated sheet according to any one of claims 1 to 12 to inkjet printing.

14. A shaped product obtained by subjecting the laminated sheet according to any one of claims 1 to 12 to inkjet printing and laser cutting.

15. A method for producing the laminated sheet according to claim 6, comprising co-extrusion forming the laminated sheet using a recycled resin composition (R) composed of a pulverized material of the laminated sheet previously produced or a processed material of the pulverized material as at least a part of all raw materials of the base layer.

21S

1

21

11

22

22S

Fig. 1

ASS

SSS

ASA

0.172

0.434

0.228

140

[ppm]

Fig. 2

Fig. 3

Fig. 4

## INTERNATIONAL SEARCH REPORT

| International application No. |
|---|
| **PCT/JP2023/046045** |

| | |
|---|---|
| **A.** | **CLASSIFICATION OF SUBJECT MATTER** |

*B32B 27/30*(2006.01)i; *B32B 27/00*(2006.01)i; *B32B 27/08*(2006.01)i; *B41M 5/52*(2006.01)i; *C08L 25/04*(2006.01)i; *C08L 33/10*(2006.01)i; *C08L 33/20*(2006.01)i
FI: B32B27/30 A; B32B27/30 B; B41M5/52 100; B32B27/08; B32B27/00 F; C08L33/10; C08L25/04; B32B27/00 B; C08L33/20

According to International Patent Classification (IPC) or to both national classification and IPC

| | |
|---|---|
| **B.** | **FIELDS SEARCHED** |

Minimum documentation searched (classification system followed by classification symbols)

B32B27/00; B32B27/08; B32B27/30; B41M5/52; C08L25/04; C08L33/10; C08L33/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 2021-160119 A (SUMIKA ACRYL CO., LTD.) 11 October 2021 (2021-10-11) claims, paragraphs [0001]-[0025], [0163]-[0210], fig. 1, 2 | 1-3, 6-15 |
| A | | 4, 5 |
| A | JP 2009-285892 A (PS JAPAN CORP.) 10 December 2009 (2009-12-10) entire text | 1-15 |
| A | JP 59-12850 A (ASAHI CHEMICAL INDUSTRY CO., LTD.) 23 January 1984 (1984-01-23) entire text | 1-15 |
| A | JP 2011-528450 A (3M INNOVATIVE PROPERTIES COMPANY) 17 November 2011 (2011-11-17) entire text | 1-15 |
| A | US 5700566 A (ROEHM GMBH CHEMISCHE FABRIK) 23 December 1997 (1997-12-23) entire text | 1-15 |

| ✓ Further documents are listed in the continuation of Box C. | ✓ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 February 2024** | **27 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 640 431 A1**

**INTERNATIONAL SEARCH REPORT**

| International application No. |
| :--- |
| **PCT/JP2023/046045** |

**C.    DOCUMENTS CONSIDERED TO BE RELEVANT**

| Category* | Citation of document, with indication, where appropriate, of the relevant passages | Relevant to claim No. |
| :---: | :--- | :---: |
| A | JP 2008-221839 A (JSP CORP.) 25 September 2008 (2008-09-25)<br>    entire text | 1-15 |
| A | US 2020/0290324 A1 (ARKEMA FRANCE) 17 September 2020 (2020-09-17)<br>    entire text | 1-15 |
| P, A | JP 2023-154486 A (KURARAY CO., LTD.) 20 October 2023 (2023-10-20)<br>    entire text | 1-15 |

**EP 4 640 431 A1**

| Patent document cited in search report | | | Publication date (day/month/year) | Patent family member(s) | | | Publication date (day/month/year) |
|---|---|---|---|---|---|---|---|
| JP | 2021-160119 | A | 11 October 2021 | (Family: none) | | | |
| JP | 2009-285892 | A | 10 December 2009 | (Family: none) | | | |
| JP | 59-12850 | A | 23 January 1984 | (Family: none) | | | |
| JP | 2011-528450 | A | 17 November 2011 | US | 2011/0109966 | A1 | |
| | | | | WO | 2010/008933 | A1 | |
| | | | | EP | 2310886 | A1 | |
| | | | | KR | 10-2011-0038689 | A | |
| | | | | CN | 102089685 | A | |
| | | | | TW | 201011333 | A | |
| US | 5700566 | A | 23 December 1997 | EP | 707953 | A2 | |
| | | | | DE | 4436381 | A1 | |
| | | | | NZ | 280213 | A | |
| JP | 2008-221839 | A | 25 September 2008 | US | 2008/0213607 | A1 | |
| | | | | EP | 1967359 | A2 | |
| | | | | KR | 10-2008-0076771 | A | |
| | | | | CN | 101244643 | A | |
| | | | | TW | 200918308 | A | |
| US | 2020/0290324 | A1 | 17 September 2020 | WO | 2019/067654 | A1 | |
| | | | | EP | 3687796 | A1 | |
| | | | | CN | 111655482 | A | |
| | | | | CA | 3077188 | A1 | |
| JP | 2023-154486 | A | 20 October 2023 | (Family: none) | | | |

Form PCT/ISA/210 (patent family annex) (July 2022)

35

**REFERENCES CITED IN THE DESCRIPTION**

**Patent documents cited in the description**

- JP 2016055348 A
- JP 2018094843 A
- JP 2021160119 A
- JP 2016020435 A
- JP 2022205089 A
- JP 2023084294 A
- JP 2023129664 A
- JP 2023191424 A